# EUROPEAN PATENT APPLICATION

(11) **EP 4 814 549 A1**
(43) Date of publication of application: **30.09.2026**
(21) Application number: 25225156.6
(22) Date of filing: 18.12.2025
(51) Int. Cl.: G02B 6/02, G02B 6/028

(54) **OPTICAL FIBER WITH A HEAVILY DOWN DOPED REGION**

(30) Priority: 28.03.2025 IN 202511030080
(71) Applicant: Sterlite Technologies Limited, Gurugram, Haryana 122102 (IN)
(72) Inventor: Balakrishnan, Janarthanan, 122102 Gurugram (IN); Malviya, Apeksha, 122102 Gurugram (IN); Munige, Srinivas Reddy, 122102 Gurugram (IN); Pandey, Anand, 122102 Gurugram (IN)
(74) Representative: Valet Patent Services Limited

(57) **Abstract**

The present disclosure relates to an optical fiber (100) for reduced loss, achieved through a deep trench structure formed and is bend-insensitive consists of a core region (102) with a relative refractive index (RI) ranging from 0.15% to 0.45%, surrounded by a cladding region (108) containing at least one low RI region (104) defined by a trench RI profile having a gradual decrease in RI. In particular, the minimum trench relative RI (Δtₘᵢₙ) ranges from -0.36% to -0.7%, and the thickness (T) of the low RI region (104)is between10 µm to 16 µm. Further, the low RI region (104) is formed by doping fluorine into the porous core soot preform in the presence of fluorine-containing gases and carrier gases, ensuring efficient fabrication of optical fibers (100) with enhanced bend performance, low attenuation, and minimal micro bend losses, suitable for highperformance telecommunications.

## Description

### TECHNICAL FIELD

Embodiments of the present disclosure relate to the field of telecommunication fiber, and more particularly, relates to an optical fiber with a heavily down doped region.

This application claims the benefit of Indian Application No. "IN202511030080" titled "OPTICAL FIBER WITH A HEAVILY DOWN DOPED REGION" filed by the applicant on March 28, 2025, which is incorporated herein by reference in its entirety.

### Background Art

Optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information. In a typical cable arrangement, optical fibers are placed in a tubular assembly. A tube may be disposed inside an outer jacket or may form the outer jacket. In either case, the tube typically provides at least some level of protection for the fibers contained therein.

The existing methods of manufacturing optical fibers and glass preforms, including those disclosed in prior art references such as US20150331180A1, IN202311062255, IN202311043713, and US10934205B2, present significant challenges in achieving the desired performance characteristics for highly bend-insensitive optical fibers. These challenges primarily stem from the manufacturing complexities and limitations of current techniques, particularly in terms of achieving the required refractive index (RI) differences in the trench region and maintaining the control over waveguide parameters such as macro bend loss, micro bend loss, and attenuation.

One significant disadvantage of the fibers disclosed in US 2015/0331180 A1 and IN 202311062255 is the presence of an intermediate layer or buffer clad region between the core and the trench region, which increases manufacturing complexity and micro-bend loss. While these references describe optical fibers with trench regions, the presence of the intermediate layer introduces additional complexity and cost in the manufacturing process. Moreover, the intermediate layer can disrupt the control of waveguide parameters, leading to a significant increase in micro bend loss, which is detrimental to the performance of the optical fiber, especially in tight bend applications.

The trench region immediately adjacent to the core, as described in prior art reference IIN202311043713, does not provide sufficient bend insensitivity in applications requiring low macro bend loss at smaller bend radii. The lack of a high concentration of down-dopants in the trench region limits the fiber's ability to maintain low loss even at tighter bends, making it unsuitable for highly bend-insensitive applications.

Further complicating the situation is the method used in the Rod-in-Cylinder (RIC) process, where a core rod (having only up doped core region) is inserted into a fluorine doped glass cylinder (innermost portion of the glass cylinder having a down-doped region) to form a glass preform. While this method allows for the creation of a trench region immediate to the core region but the exposure of the core rod to the external environment during the preform formation process, without a pure silica region adjacent to the core, leads to an undesirable increase in attenuation at 1383 nm due to increased water (OH) absorption. This attenuation makes the resulting optical fiber unsuitable for applications high-performance fiber optic systems.

Additionally, in the soot preform process, fluorine doping is employed to create a trench region, but this technique also has its own set of limitations. The fluorine doping can only be carried out to a certain point of saturation, beyond which phase separation or crystallization occurs, rendering the glass preform opaque. This cloudiness increases OH absorption and results in higher attenuation, which is not desirable for maintaining low-loss characteristics. Although it is possible to control the trench delta to some extent, achieving the desired balance of optical properties-such as macro bend loss, micro bend loss, mode field diameter (MFD), cable cut-off, and attenuation-is difficult with existing methods.

There is an urgent need for a technical solution that overcomes the above-stated limitations in the prior arts by a new approach to manufacture of optical fibers and glass preforms that can overcome the above disadvantages by developing an optical fiber and glass preform manufacturing process that enables the formation of a trench region with a higher delta, while also ensuring minimal OH absorption and low attenuation. Further, the process should allow for improved control of waveguide parameters, such as MFD and macro bend loss, in compliance with standards like ITU-T G657, which governs the performance of bend-insensitive fibers. Thus, to overcome the disadvantages of the prior art, the present disclosure provides an optical fiber with a heavily down doped region.

### SUMMARY OF THE DISCLOSURE

Embodiments of the present disclosure relates to an optical fiber comprising at least one core region defined by a core relative RI (Δc) between 0.15% to 0.45%; and a cladding region surrounding the at least one core region. In particular, the cladding region comprising at least one low RI region, where the at least one low RI region is defined by a trench RI profile having a trench relative RI (Δt), a minimum trench relative RI (Δtₘᵢₙ), a minimum trench radius corresponding to the minimum trench relative RI (Δtₘᵢₙ). Moreover, a core radius (Rc) corresponding to start of the at least one low RI region, where the core radius (Rc) being a radius where first instance of relative RI being equal to zero is encountered when moving from the minimum trench relative RI (Δtₘᵢₙ) towards the centre of the optical fiber in a radial direction, where the minimum trench relative RI (Δtₘᵢₙ) being in a range of -0.36% to -0.7%. Further, the trench RI profile decreases monotonically from the core radius (Rc) to the minimum trench radius over thickness range of 10 µm to 16 µm.

According to the first aspect of the present disclosure, at least one low RI region is adjacent to the at least one core region such that the at least one low refractive index region is directly adjacent to the at least one core region such that the radial thickness of any intermediate region having a relative refractive index Δ ≈ 0 % (±0.05 %) is less than 1 µm. Relative refractive index Δ is defined with respect to pure undoped silica glass as reference (Δ = 0 %). The relative refractive index Δ at a radial position r is calculated as Δ(r) = (n(r)² - nsilica²)/(2n(r)²) × 100 %, where n(r) is the refractive index at radius r and nsilica is the refractive index of pure silica.

According to the second aspect of the present disclosure, the minimum trench relative RI (Δtₘᵢₙ) of the at least one low RI region is at a radius between 14 µm to 19 µm when the glass diameter of the optical fiber is between 80 µm to 125 µm.

According to the third aspect of the present disclosure, the minimum relative RI of at least one low RI region being at a radius between 16 µmto 20 µm when the glass diameter of the optical fiber is between 110 µm to 125 µm. Alternatively, the minimum relative RI of at least one low RI region being at a radius between 15 µm to 17 µm when the glass diameter of the optical fiber is between 90 µm to 110 µm. Alternatively, the minimum relative RI of the at least one low RI region being at a radius between 13 µmto 16 µm when the glass diameter of the optical fiber is between 70 µm to 90 µm.

According to the fourth aspect of the present disclosure, a ratio of a trench thickness and the minimum trench relative RI (Δtₘᵢₙ) is 14 to 47.

According to the fifth aspect of the present disclosure, a trench thickness being in a range of 10 microns to 15.8 microns when the optical fiber has at least one of a macro bend loss of less than or equal to 0.15 dB/turn at a bend radius of 5 mm and a wavelength of 1550 nm, or a macro bend loss of less than or equal to 0.45 dB/turn at a bend radius of 5 mm and a wavelength of 1625 nm.

According to the sixth aspect of the present disclosure, trench relative RI varies from 0% to -0.2% between over the first 4 µm of trench thickness (measured radially outward from the core radius Rc) the trench relative refractive index varies from 0 % to -0.2 %, and over the subsequent trench thickness from 4 µm to 11.8 µm the trench relative refractive index varies from -0.2 % to Δtmin (-0.36 % to -0.7 %). The trench refractive index profile thereby exhibits a steeper slope in the first 4 µm than in the subsequent portion. Dependent on above where trench RI profile is defined by a trench slope such that the trench slope between trench thickness of 0 to 4 microns is greater than the trench slope between trench thickness of 4 to 11.8 microns. The relationship of above RI variation and slope is important while designing an optical fiber to be made using Fluorination technique so that the optical fiber can obtain a very low macro bend and micro bend loss. Because the trench region is formed using Fluorine deposition technique directly on the core region, the trench parameters such as shape, relative RI, gradual variation, minimum relative RI and the radial position of minimum relative RI is important to achieve bend insensitive fiber.

According to the seventh aspect of the present disclosure, the optical fiber has at least one of,
(i) a micro bend loss of less than or equal to 0.5 decibel/Kilometers (dB/Km) at a wavelength of 1550 nm, measured by Wire Mesh Method in IEC 62221
(ii) an attenuation of less than or equal to 0.35 dB/Km at a wavelength of 1310 nm,
(iii) an attenuation of less than or equal to 0.35 dB/Km at a wavelength of 1383 nm,
(iv) an attenuation of less than or equal to 0.2 dB/Km at a wavelength of 1550 nm, and
(v) an attenuation of less than or equal to 0.23 dB/Km at a wavelength of 1625 nm.

According to the eighth aspect of the present disclosure, the difference of minimum trench radius and radial distance of trench starting position is greater than the difference of radial distance of the outer end of the trench and the minimum trench radius. Further, at least two optical fibers, where the at least two optical fibers are arranged in an intermittently bonded configuration.

In an aspect of the disclosure, a method for manufacturing a core preform for optical fibers, the method comprises providing a porous core soot preform in an atmosphere containing a fluorine-containing gas and one or more carrier gases, where the porous core soot preform having a core region and a cladding region; doping the porous core soot preform with fluorine at a temperature ranging in 1050 °C to 1350 °C; and consolidating the doped porous soot core preform by exposing the doped porous soot core preform to an inert atmosphere at a consolidation temperature ranging from 1400° C to 1600° C, thereby forming a glass core preform having a fluorine doped region along its longitudinal length and a trench region is obtained by fluorine doping having a relative refractive index (Δt) ranging from -0.36% to -0.7%.

According to the ninth aspect of the present disclosure, the trench region is adjacent to at least one core region such that a buffer radial thickness where the relative refractive index Δ ≈ 0 % (±0.05 %) between the core region and the trench region is less than 1 µm. Further, the trench region is defined by a trench RI profile such that trench relative RI (Δt) first decreases monotonically from the beginning of the trench region to a minimum value of the trench relative and then increases.

According to the tenth aspect of the present disclosure, he fluorine-containing gas constitutes at least 7 % by weight of the total gas mixture during the doping step. The fluorine-containing gas is a gaseous compound selected from the group consisting of SiF₄, SF₆, CF₄, and C₂F₆. Further, the one or more carrier gases is selected from the group consisting of H₂, O₂, N₂, He, Ar. In another embodiment of the disclosure, the carrier gas is O₂.

According to the eleventh aspect of the present disclosure, doping the porous core soot preform with fluorine further comprising, doping the porous core soot preform radially inward till 2/3rd portion of the porous core soot preform. Further, dehydrating the porous core soot preform prior to doping in presence of one or more dehydrating agents.

In accordance with an embodiment of the present disclosure, the ratio of diameter of the cladding region and the core region is greater than 3.45.

In accordance with an embodiment of the present disclosure, a method for manufacturing an optical fibre comprises manufacturing a glass core preform according to claim; stretching the glass core preform to form one or more glass core rod, surrounding the glass core rod with an outer cladding region to form an optical fibre preform; and melting the optical fibre preform in a furnace to draw an optical fibre.

In accordance with an embodiment of the present disclosure, a method for manufacturing a multicore optical fibre comprises a glass core preforms according to claim 1; stretching the glass core preforms to form a plurality of glass core rods, stacking the plurality of glass core rods in corresponding drilled holes in a multicore preform assembly, collapsing the multicore preform assembly to form a multicore optical fiber preform; and drawing the multicore optical fiber preform to obtain a multicore optical fiber.

In accordance with an embodiment of the present disclosure, the optical fiber has a core region with a core relative RI (Δc) between 0.15% and 0.45%. Surrounding the core region is a cladding region that has two low RI regions: a first low RI region next to the core region with a first trench relative RI (Δt1) between -0.36% and -0.7%, and a second low RI region separated from the first low RI region by a pure silica region, with a second trench relative RI (Δt2) between -0.25% and -0.45%.

In accordance with an embodiment of the present disclosure, a multicore optical fiber has a plurality of core regions, each core region of the plurality of core regions having a core relative refractive index (RI) (Δc) between 0.15% and 0.45%. A cladding region around the plurality of core regions has a low RI region next to each core regions with a trench relative RI (Δt) between -0.36% and -0.7%, and a peripheral low RI region near or at the outer edge of the cladding with a trench relative RI between - 0.15% and -0.45% such that crosstalk is less than -40 dB/km at a wavelength of 1550 nm.

In accordance with an embodiment of the present disclosure, , an optical fiber has a core region with a core relative RI (Δc) between 0.15% and 0.45%. The cladding region around the core region has a low RI region next to the core region with a trench relative RI (Δt) between -0.36% and -0.7%, and a peripheral low RI region near or at the outer edge of the cladding region with a trench relative RI between -0.15% and -0.45%,where the optical fibers has a glass diameter of less than 80 µm ± 1 µm.

In accordance with an embodiment of the present disclosure, an optical fiber cable has multiple single core and/or multicore optical fibers, each with one or more core region having a core relative RI (Δc) between 0.15% and 0.45%. Each optical fiber also has a cladding region 108 with at least one low RI region defined by a trench relative RI (Δt) between -0.36% and -0.7%. The cable has a sheath or jacket surrounding the optical fibers. There may be other layers of protection between the optical fibers and the sheath.

In accordance with an embodiment of the present disclosure, a method for manufacturing an optical fiber involves creating a porous core soot preform with a core region and a cladding region. The porous core soot preform is doped with fluorine in an atmosphere containing fluorine gas (like SiF4, SF6, CF4, or C2F6) and carrier gases (like H2, O2, N2, He, or Ar), where the fluorine gas makes up at least 7% of the total weight. The doped soot preform is then heated in an inert atmosphere at 1400°C to 1600°C to form a glass core preform with a core region and a fluorine-doped trench region having a trench relative RI (Δt) between -0.36% and -0.7%. The glass core preform is stretched into glass core rods which is further surrounded by an outer cladding, and then drawn into optical fibers.

In accordance with an embodiment of the present disclosure, an optical fiber has a core region with a core relative (RI) (Δc) between 0.15% and 0.45%. The cladding region around the core region has a low RI region with a trench relative RI (Δt) between -0.36% and -0.7%, monotonically decreasing from the core radius (Rc) to a minimum trench relative RI (Δtₘᵢₙ). The trench thickness is between 10 µm and 16 µm. The optical fiber has a macro bend loss of less than 0.15 dB/turn at a 5 mm bend radius and a wavelength of 1550 nm.

In accordance with an embodiment of the present disclosure, an optical fiber has a core region with a core relative RI (Δc) between 0.15% and 0.45%. The cladding region around the core region has a low RI region with a trench relative RI (Δt) between -0.36% and -0.7%, monotonically decreasing from the core radius (Rc) to a minimum trench relative RI (Δtmin). The trench thickness is between 10 µm and 16 µm. The optical fiber has an attenuation of less than 0.18 dB/km at a wavelength of 1550 nm.

The foregoing objectives of the present disclosure are attained by providing an optical fiber cable with bundles of optical fibers.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating an optical fiber (100) in accordance with a first embodiment of the disclosure;
Fig. 2 is a pictorial snapshot illustrating an RI profile of optical fiber (100) in accordance with a first embodiment of the disclosure;
Fig. 3 is a pictorial snapshot illustrating an optical fiber (100) in accordance with a second embodiment of the disclosure;
Fig. 4 is a pictorial snapshot illustrating RI profile of optical fiber (100) in accordance with a second embodiment of the disclosure;
Fig. 5 is a pictorial snapshot illustrating an optical fiber (100) in accordance with a third embodiment of the disclosure;
Fig. 6 is a pictorial snapshot illustrating RI profile of optical fiber (100) in accordance with a third embodiment of the disclosure;
Fig. 7 is a pictorial snapshot illustrating a multicore optical fiber (200) in accordance with a first embodiment of the disclosure;
Fig. 8 is a pictorial snapshot illustrating multicore optical fiber (200) in accordance with a second embodiment of the disclosure;
Fig. 9 is a pictorial snapshot illustrating multicore optical fiber (200) in accordance with a third embodiment of the disclosure;
Fig. 10 is a pictorial snapshot illustrating multicore optical fiber (200) in accordance with a fourth embodiment of the disclosure;
Fig. 11 is a pictorial snapshot illustrating a multicore optical fiber cable (300) in accordance with a fifth embodiment of the disclosure; and
Fig. 12 is a pictorial snapshot illustrating RI profile of a multicore optical fiber (100) in accordance with an embodiment of the disclosure;
Fig. 13 is a pictorial snapshot illustrating a flow chart for a method (400) of manufacturing an optical fiber (100) in accordance with an embodiment of the disclosure;
Fig. 14 is a pictorial snapshot illustrating a flow chart for a method (500) of manufacturing a multicore optical fiber (200) in accordance with an embodiment of the disclosure.

The multicore optical fibre cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

Existing methods for manufacturing bend-insensitive optical fibers, such as the Rod-in-Cylinder (RIC) process or standard fluorine doping in soot processes, present significant limitations. In the RIC process, exposing a Ge-doped core rod to the environment during preform assembly leads to increased water (OH) absorption, resulting in unacceptably high attenuation, particularly at the 1383 nm wavelength. Conversely, while direct fluorine doping of a soot preform can create a trench, fluorine doping saturates at a limited level before phase separation or crystallization occurs, rendering the glass opaque and increasing OH absorption. This saturation prevents achieving a trench with a sufficiently deep relative refractive index (Δtmin) required for superior bend insensitivity while maintaining low attenuation.

Therefore, there is a need for an optical fiber and a manufacturing method that overcomes these limitations by enabling the formation of a deep, controlled trench region immediately adjacent to the core, without an intervening buffer layer, while ensuring minimal OH absorption and low attenuation across all telecommunication wavelengths.

The present disclosure provides a solution through a modified manufacturing process and the resulting optical fiber structure. In an embodiment, fluorine doping of a porous core soot preform under specific conditions to create a heavily down-doped region (trench) directly adjacent to the up-doped core region.

The above process yields a glass core preform and, subsequently, an optical fiber (100, 200) with a refractive index profile. Various embodiments may incorporate one or more of the following features of the optical fiber:
A core region (102) with a core relative refractive index Δc in the range of 0.15% to 0.45%.

A cladding region (108) surrounding the core region (102).

At least one low refractive index (RI) region or trench region (104) within the cladding region (108). This trench region (104) has a minimum trench relative refractive index (Δtmin) in the deep range of -0.36% to -0.70%, preferably -0.5% to -0.7%. The trench region (104) is directly adjacent to the core region (102). There is no substantial pure silica buffer layer. Specifically, the radial thickness of any intermediate region having a relative refractive index Δ within ±0.05% of pure silica (Δ ≈ 0%) between the core region (102) and the trench region (104) is less than 1 µm. In preferred embodiments, it is essentially zero.

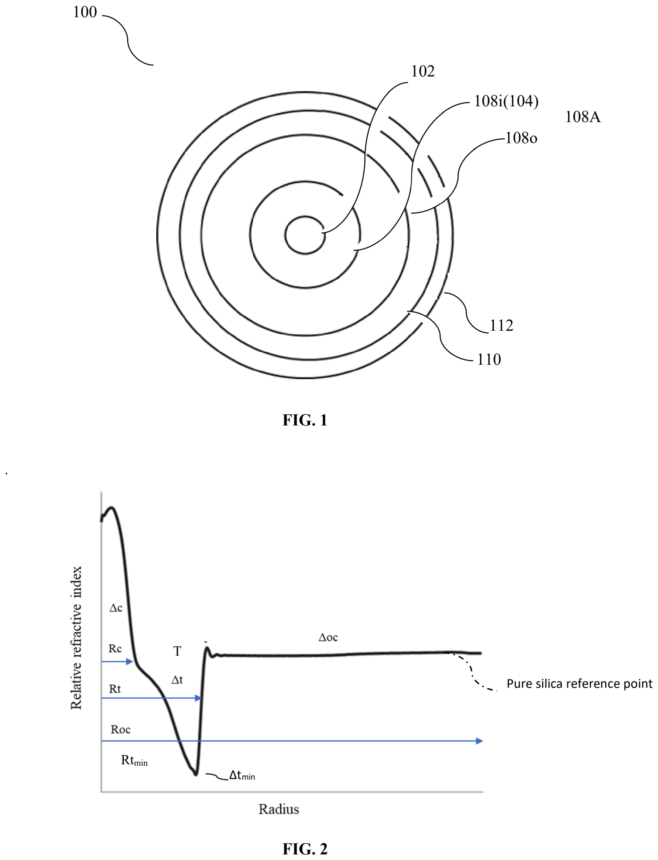

In various embodiments, the trench has a profile (Fig. 2, profile 200). Various embodiments may incorporate one or more of the features of trench:
The trench refractive index profile decreases monotonically from a core radius (Rc) to a minimum trench radius (Rtmin) over a trench thickness (T) in the range of 10 µm to 16 µm.

The profile exhibits a specific shape: Over the first 4 µm of the trench thickness (measured radially outward from Rc), the relative refractive index drops steeply from 0% to approximately -0.2%. Over the subsequent portion of the trench thickness (e.g., from 4 µm to 11.8 µm), it decreases more gradually from -0.2% to the minimum value Δtmin. Consequently, the slope of the refractive index profile is greater in the first 0-4 µm than in the subsequent 4-11.8 µm region.

The ratio of the trench thickness (T) to |Δtmin| is in the range of 14 to 47 µm/%. The ratio of trench thickness (T) in micrometers to the minimum trench relative refractive index (Δtmin) in percent, ranging from 14 to 47 µm/% - defines a structural relationship that links the physical geometry of the trench to its optical strength. This ratio, expressed in µm/%, quantifies how much radial distance is allocated per unit of refractive index depression. A value below 14 µm/% corresponds to either an insufficiently deep trench (Δtmin not negative enough) or an overly narrow trench (T too small), either of which fails to provide adequate mode confinement under bend stress, leading to high macro bend loss. Conversely, a ratio above 47 µm/% indicates a trench that is too broad for its depth, which spreads the index depression over too large a distance, increasing the cost, and potentially raising manufacturability issues particularly in low diameter fiber and multicore fibers. The ratio within 14-47 µm/% provides a compromise that maximizes bend resistance while maintaining low attenuation and practical manufacturability.

For a standard fiber with a glass diameter of 80-125 µm, the minimum trench relative refractive index (Δtmin) is located at a radius between 14 µm and 19 µm.

Fig. 1 illustrates an optical fiber (100) comprising a core region (102), an inner cladding region (108i), an outer cladding region (108o), which makes a cladding region (108A), a primary coating layer (110), a secondary coating layer (112). In particular, the core region (102)is defined by a first alpha value (α1) in the range of 4 to 9. Moreover, the inner cladding region (108i) comprises a low refractive index (RI) region, or a trench region (104), defined by a second alpha value (α2) in the range of 2 to 5. Further, alpha values correspond to the refractive index gradients in the core region (100) and the trench region (104), with α1 representing the gradient in the core region (102) and α2 representing the gradient in the low RI region(i.e., the trench region (104)). The precise control of these gradients is crucial for ensuring that the optical fiber (100) maintains its bend-insensitive properties while also providing efficient light guiding with minimal attenuation.

In accordance with an embodiment of the present disclosure, attenuation is referred to as reduction in power of a light signal as it is transmitted. Particularly, the attenuation is caused by Rayleigh scattering, absorption of the light signal, and the like.

In accordance with an embodiment of the present disclosure, the core region (102) herein refers to an inner most cylindrical structure present in the center of the optical fiber (100), that is configured to guide the light rays inside the optical fiber

(100). In particular, the core region (102) is defined by a core relative RI(Δc)which is a change in RI in the core region (102) with reference to the RI of the pure silica region. Moreover, the core relative RI (Δc) is determined by a delta equation described below. Further, the core region (102) exhibits a maximum relative refractive index Δc in the range of 0.15 % to 0.45 %, preferably 0.32 % to 0.42 %.

In accordance with an embodiment of the present disclosure, the cladding region (108A) refers to one or more layered structure covering the core region (102) of an optical fiber (100) from the outside, that is configured to possess a lower refractive index than the refractive index of the core to facilitate total internal reflection of light rays inside the optical fiber (100). In particular, the cladding region (108A) of the optical fiber (100) may include an inner cladding region (104) coupled to the outer surface of the core region (102) of the optical fiber (100) and an outer cladding region (108o) coupled to the inner cladding region (108i) from the outside. Moreover, the inner cladding region (108i) may comprise a low RI region (i.e., the trench region (104)) where the relative RI in the low RI region with respect to RI of pure silica region is less than 0. Further, the low RI region is formed by doping the cladding region (108A) with a down do pant such as a halogen.

In accordance with an embodiment of the present disclosure, the optical fiber (100) may have a mode field diameter in a range of 8.2 micrometer (µm) to 9.0 µm at a wavelength of 1310 nanometer (nm). The range of MFD between 8.2 µm to 9 µm, which is an important factor for determining the ability of the optical fiber (100) to confine light. If the MFD is below 8.2 µm, the optical fiber (100) may not be desirable in practical application as non-linearity increases in the optical fiber (100) which will impact the transmission of signal and increases transmission loss, particularly in telecom networks as per ITU recommendations. Conversely, if the MFD exceeds 9 µm, light confinement becomes weaker, resulting in greater bend losses, including both macro bend and microbend losses, which degrade the overall performance of the optical fiber (100) . To further optimize performance, the glass diameter of the optical fiber (100) is maintained between 80 µm and 125 µm, ensuring structural strength and effective light propagation.

In accordance with an embodiment of the present disclosure, the optical fiber (100) has a coating diameter in the range of 140 µm to 180 µm, providing the necessary protection and durability while still maintaining the performance of the optical fiber (100) in terms of bend insensitivity and low-loss transmission, even in tight bending conditions. In general, the Mode Field Diameter (MFD) is referred to as the size of the light-carrying portion of the optical fiber (100). In case the optical fiber (100) is single-mode , the Mode Field Diameter (MFD) includes the core region (102) as well as a small portion of the surrounding cladding glass of the optical fiber (100). The selection of desired Mode Field Diameter (MFD)helps to describe the size of the light-carrying portion of the optical fiber (100).

In accordance with an embodiment of the present disclosure, the optical fiber (100) may have a cable cut-off wavelength of less than or equal to 1260 nm. In particular, a glass diameter of the optical fiber (100) without coating (i.e., a bare fiber diameter) may be in a range of 80 µm to 125 µm with a tolerance of ± 0.7 µm. Moreover, the optical fiber has an outer glass diameter (2 × Roc) in the range of 80 µm to 125 µm ± 0.7 µm, and in particular embodiments ≤ 100 µm or ≤ 80 µm ± 0.7 µm.

In accordance with an embodiment of the present disclosure, the optical fiber (100) may have at least one of a micro bend loss or an attenuation loss of less than or equal to 0.5 decibel per kilometer (dB/Km) at a wavelength of 1550 nm, the attenuation of less than or equal to 0.35 dB/Km at a wavelength of 1310 nm, the attenuation of less than or equal to 0.32 dB/Km at a wavelength of 1383 nm, the attenuation of less than or equal to 0.2 dB/Km at a wavelength of 1550 nm, and the attenuation of less than or equal to 0.18 dB/Km at a wavelength of 1625 nm
In accordance with an embodiment of the present disclosure, the micro bend loss is referred to as a loss in an optical fiber that relates to a light signal loss associated with lateral stresses along a length of the optical fiber (100). Further, the micro bend loss is due to coupling from the guided fundamental mode of the optical fiber (100) to lossy modes or cladding modes. The micro bend loss is less than 0.5dB/Km at 1550 nm, measured by Wire Mesh Method in IEC 62221.

In accordance with an embodiment of the present disclosure, the method for manufacturing a glass core preform for the optical fiber (100) comprises providing a porous core soot preform in an atmosphere containing a fluorine-containing gas and one or more carrier gases. In particular, the porous core soot preform having a core region (102) and an inner cladding region (herein after interchangeably referred as inner cladding region) (108i), doping the porous core soot preform with fluorine at a temperature in the range of 1050 °C to 1350 °C; and consolidating the fluorine-doped porous soot preform in an inert atmosphere at a temperature in the range of 1400 °C to 1600 °C, thereby forming a glass core preform having a down doped region (hereinafter interchangeably referred as a low RI region or trench region (104)) in the inner cladding region (108i) along its longitudinal length and the trench region (104) obtained by fluorine doping having a trench relative refractive index (Δt) ranging from -0.36% to -0.7%. Further, to obtain the porous core soot preform, silica soot and/or up dopant is deposited over a target rod i.e. the mandrel (such as Al2O3) via deposition process to form a porous core soot preform. The porous core soot preform comprise of a core region (102) and a cladding region (108), where the core region (102) is formed by doping the core region (102) with the up dopant such as Ge, where the cladding region (108) is further doped with Fluorine in subsequent process step. The core region (102) reaction: GeCl4 (g) + O2 (g) ↔ GeO2 (s) + Cl2 (g). The corresponding silica precursor, SiCl4, also undergoes oxidation reaction to form SiO2 particles, i.e., SiCl4(g) + O2(g) ↔ SiO2(s) + Cl2(g).

In accordance with an embodiment of the present disclosure, the optical fiber (100) is manufactured using a modified fluorine deposition process to achieve high trench relative RI (Δt) immediately next to the core region (102) which makes it suitable for bend insensitive application. In particular, the porous core soot preform includes a core region (102) up doped in the central region and an un doped region. Further, the fluorine is diffused in the un doped region of the porous core soot preform that eliminates the un doped region between the core region (102) with up doped region and the low RI region (trench region (104)).

In accordance with an embodiment of the present disclosure, a number of techniques are used for making the optical fiber (100) (modified chemical vapor deposition (MCVD), plasma chemical vapor deposition (PCVD), vapor axial deposition (VAD), etc.), one of the most common methods of making optical fiber (100) is the outside vapor deposition (OVD) process. In the OVD process, silica and doped silica particles are pyrogenically generated in an oxygen flame. Further, soot preforms are formed layer-by-layer by deposition of vapors and particles on a rotating cylindrical target rod by traversing the soot-laden flame along the axis of the cylindrical target. The porous soot preform thus formed are subsequently treated with a drying agent (e.g., chlorine) for removal of water and metal impurities and are sintered into glass blanks at temperatures ranging from 1100°C to 1500°C. The sintered glass blanks are then drawn into the optical fiber (100) of125 mm diameter for their use in telecommunication systems.

In accordance with an embodiment of the present disclosure, the glass core preform is stretched to form one or more glass core rod. In particular, the glass core rod comprises a core region (102) and an inner cladding region (108i) down doped (i.e., trench region (104)). Moreover, in the glass core rod, the ratio of the diameter of the inner cladding region (including the trench) to the diameter of the core region is greater than 3.45, preferably in the range of 3.5 to 4.3. Further, the glass core rod is surrounded by an outer cladding region (108o) to form an optical fiber preform which is further melted in a draw furnace to draw an optical fiber (100). A rod diameter of the glass core rod is between 30 mm to 37 mm such that the diameter of the core region (102) in the glass core rod is less than 12mm.

In accordance with an embodiment of the present disclosure, optical fiber (100) may have a macro bend loss of less than or equal to 0.15 dB/turn at a bend radius of 5 mm and a wavelength of 1550 nm. In particular, the optical fiber (100) may have the macro bend loss of less than or equal to 0.45 dB/turn at the bend radius of 5 mm and the wavelength of 1625 nm. Further, the optical fiber (100) may have the macro bend loss of less than or equal to 0.08 dB/turn at the bend radius of 7.5 mm and the wavelength of 1550 nm.

In accordance with an embodiment of the present disclosure, the optical fiber (100) may have the macro bend loss of less than or equal to 0.25 dB/turn at the bend radius of 7.5 mm and the wavelength of 1625 nm. Alternatively, the optical fiber (100) may have the macro bend loss of less than or equal to 0.03 dB/turn at the bend radius of 10 mm and the wavelength of 1550 nm. Alternatively, the optical fiber (100) may further have the macro bend loss of less than or equal to 0.1 dB/turn at the bend radius of 10 mm and the wavelength of 1625 nm.

In general, the macro bend loss as used herein is referred to as the losses induced in bends around mandrels (or corners in installations), generally more at the cable level or for the optical fiber (100). The macro bend loss occurs when the optical fiber (100) is subjected to a significant amount of bending above a critical value of curvature. The macro bend loss is also called large radius loss.

In accordance with an embodiment of the present disclosure, the optical fiber (100) may be coated with a primary coating layer (110) and a secondary coating layer (112) that results in a coated optical fiber (100) which may be used in an optical fiber cable (300). In particular, the primary coating (110) may surround the cladding (108A), the secondary coating (112) may surround the primary coating (110), and a colored coating (not shown) may surround the secondary coating (112).

In one aspect of the present disclosure, the secondary coating (112) may be a colored secondary coating.

In accordance with an embodiment of the present disclosure, the optical fiber (100) may be used in an intermittently bonded ribbon (IBR) cable (1100) (i.e., the optical fiber cable (300)) where more than one optical fiber (100) is bonded to each other at an intermittent interval. The optical fiber cable (300) may be manufactured using the optical fiber (100) of the present disclosure to obtain increased packing efficiency, increased packing density because of reduction in diameter of the optical fiber (100) and improvement in waveguide properties of the optical fiber (100).

In accordance with an embodiment of the present disclosure, the thickness of the primary coating (110) may be in a range of 4 µm to 20 µm.

In accordance with an embodiment of the present disclosure, the thickness of the secondary coating (112) may be in a range of 4 µm to 20 µm.

In some aspects of the present disclosure, a coating thickness of the secondary coating (112) being colored may be in a range of 10 µm to 30 µm.In another embodiment of the disclosure, the thickness of the primary coating (110) may be in a range of 20 µm to 40 µm.

In accordance with an embodiment of the present disclosure, a young's modulus of the primary coating (110) may be less than 0.5 Megapascals (MPa). Alternatively, the young's modulus of the primary coating (110) may be less than 0.4 MPa.

In some aspects of the present disclosure, the young's modulus of the primary coating (110) may be less than or equal to 0.2 MPa and greater than or equal to 0.1 MPa.

In some aspects of the present disclosure, a young's modulus of the secondary coating (112) may be less than 1500 MPa.

In some aspects of the present disclosure, the young's modulus of the secondary coating (112) may be in a range of 1200 MPa to 1500 MPa. Alternatively, the young's modulus of the secondary coating (112) may be less than or equal to 1250 MPa and greater than or equal to 1050 MPa.

In accordance with an embodiment of the present disclosure, a diameter of the optical fiber (100) that is coated by the primary coating layer (110) and the secondary coating layer (112) may be in a range of 140 µm to 180 µm. Alternatively, the diameter of the optical fiber (100) coated by the primary coating layer (110) and the secondary coating layer (112) may be in a range of 160 µm to 200 µm.

In accordance with an embodiment of the present disclosure, the diameter of the optical fiber (100) coated by the primary coating layer (110) and the secondary coating layer (112) may be greater than 210 µm less than 250 µm. Alternatively, the diameter of the optical fiber (100) coated by the primary coating layer (110) and the secondary coating layer (112) may be greater than 210 µm less than 230 µm.

Table 1 tabulates relation between a glass diameter, a primary coating thickness & primary coating young's modulus of the primary coating layer (110), a secondary coating thickness & secondary coating youngs modulus of the secondary coating layer (112) of the optical fiber (100):

**Table 1**

| Glass diameter (in µm) | Primary coating thickness (in µm) | Primary coating Young's modulus (in MPa) | Secondary coating thickness (in µm) | Secondary coating Young's modulus (in MPa) |
|---|---|---|---|---|
| 60 to 70 | 20 to 30 | 0.2 to 0.4 | 20 to 30 | 900 to 1200 |
| 70 to 90 | 15 to 25 | 0.2 to 0.4 | 15 to 25 | 900 to 1200 |
| 60 to 70 | 20 to 30 | 0.1 to 0.2 | 20 to 30 | 1200 to 1500 |
| 70 to 90 | 15 to 25 | 0.1 to 0.2 | 15 to 25 | 1200 to 1500 |
| 90 to 110 | 10 to 20 | 0.2 to 0.4 | 10 to 20 | 900 to 1200 |
| 90to 110 | 10 to 20 | 0.2 to 0.4 | 10 to 20 | 900 to 1200 |
| 110 to 125 | 4 to 20 | 0.1 to 0.2 | 4 to 20 | 1200 to 1500 |
| 110 to 125 | 4 to 20 | 0.1 to 0.2 | 4 to 20 | 1200 to 1500 |

In accordance with an embodiment of the present disclosure, the optical fiber (100) may have the core region (102), that may be up doped with one of Germanium (Ge) and/or Chlorine (CI). Moreover, the optical fiber (100) may have a cladding region (108A) that may surround the core region (102). Further, the refractive index profile of the core region (102) may be an alpha profile such that a core refractive index (n1) may be derived from a first alpha value (*α*1) corresponding to a peak shaping parameter alpha (*α*). The peak shaping parameter (*α*) may be defined as how the refractive index changes as a function of radius.

In accordance with an embodiment of the present disclosure, the cladding region (108A) may have an inner cladding region (108i) (hereinafter interchangeably referred as at least one low RI region or trench region (104)) that may be defined by an inner cladding relative refractive index (Δt) (hereinafter interchangeably referred as trench relative RI). In particular, the inner cladding region (108i) may be down-doped. Further, the inner cladding region (108i) (hereinafter interchangeably referred to and designated as "the down-doped region" or "the trench region (104)") may be a continuous region adjacent to the core (102) such that a relative refractive index profile of the inner cladding region (108i) may be an alpha profile such that an inner cladding refractive index (n2) may be derived from a second alpha value (*α2*) of the peak shaping parameter (*α*)*.* The peak shaping parameter (*α*) may be defined as how the refractive index changes as a function of radius.

In accordance with an embodiment of the present disclosure, the first alpha value (*α1*) of the core region (102) may be in a range of 4 to 9, and the second alpha value (*α2*) of the inner cladding region (108i) may be in a range of 2 to 5. In particular, the optical fiber (100) may be independent of one or more pure silica regions which is generally formed between the core region (102) and a down doped region or the trench region (104) of an optical fiber (100). Further, the pure silica region (i.e., buffer clad region) increases the manufacturing cost and makes fiber manufacturing process tedious and time taking. In some aspects of the present disclosure, the optical fiber (100) may not comprise any pure silica region or undoped region adjacent to the core region (102) that makes the manufacturing of optical fiber (100) less complex and achieves the required waveguide properties.

In alternate aspects of the present disclosure, the optical fiber (100) may not comprise any pure silica region or undoped region adjacent to the core region (102) that may provide better control over required optical parameters of the optical fiber (100).

In accordance with an embodiment of the present disclosure, the cladding region (108A) may further have an outer cladding region (108o) that may surround the inner cladding region (108i). In particular, the outer cladding region(108o) region may be defined by an outer cladding relative refractive index (Δoc). The inner cladding relative refractive index (Δt) may be less than the outer cladding relative refractive index (Δoc).

In a first embodiment of the present disclosure, the outer cladding region (108o) may be undoped. The outer cladding region (108o) may have an outer cladding refractive index (n3). Further, the outer cladding refractive index (n3) may be equal to a refractive index of pure silica (n_{silica}) with a deviation of ±0.01%.Thus, the optical fiber (100) of the present disclosure provides ultra-low bend losses as well as optimized mode field diameter (MFD) values which complies with the G.657.A2 and G.657.B3 recommendations respectively and even improved optical properties as compared to the G.657.A2 and G.657.B3 recommendations. The refractive index profile includes exactly one trench region (104),that is adjacent and continuous to the core region (102). The optical fiber (100) is independent of any buffer cladding (i.e., pure silica region) adjacent to the core (102). The optical fiber (100) has low micro-bending losses due to a single and deep trench with enhanced down doping because of improved Fluorine deposition process parameters

Fig. 2 illustrates the RI profile of optical fiber (100) as per Fig. 1. In particular, the core region(102) may have a core radius (Rc), the inner cladding region (108i) may have an inner cladding radius (Rt), and the outer cladding region (108o) may have the outer cladding radius (Roc). Moreover, the core region (102) may be doped. The core region (102) may have a core relative refractive index (Δc). The core relative refractive index (Δc) may be derived from the core refractive index (n1). Further, the core relative refractive index (Δc) of the core region (102) may be in a range of 0.15 percent (%) to 0.45%. Alternatively, the core relative refractive index (Δc) of the core region (102) may be in a range of 0.35 percent (%) to 0.41%.

In an exemplary aspect of the present disclosure, the core relative refractive index (Δc) can be determined as: $Δc = \frac{\left(n{1}^{2}-{\left(nsilica\right)}^{2}\right) ∗ \left(100%\right)}{2 n {1}^{2}} ,$ where nsilica is the refractive index of pure silica (1.45701 at 633 nm).

In accordance with an embodiment of the present disclosure, the core radius (Rc) of the core region (102) may be in a range of 4.2 µm to 5 µm. In particular, the core region (102) may have a maximum value of the core relative refractive index (Δc) at a radius range of 1 µm to 3 µm of the optical fiber (100)

The relative refractive index profile of the core region (102) may be the alpha profile such that the core refractive index (n1) may be derived from the first alpha value (*α1*) of the peak shaping parameter (*α*). In particular, the first alpha value (*α1*) of the core region (102) may be in a range of 4 to 9. Further, the core refractive index (n1) may be dependent on a core peak with a maximum refractive index value (n1max) (i.e., a maximum value of the core refractive index (n1)), the core radius (Rc), the core relative refractive index (Δc), and a radial position (r) from a center of the optical fiber (100). In an exemplary aspect of the present disclosure, the core refractive index (n1) at the radial distance (r) can be determined as: $n 1 \left(r\right) = n {1}_{max} {\left(1-2Δc{\left(\frac{r}{Rc}\right)}^{α 1}\right)}^{\frac{1}{2}}$.

In general, the radial distance from the center of the optical fiber (100) where the low RI region ends is termed as the trench radius (Rt). The trench radius (Rt) minus core radius (Rc) is termed as trench thickness. The trench thickness T is defined as the radial distance from the core radius Rc (where Δ first reaches 0 % ± 0.1 % moving outward) to the radius Rtmin at which Δtmin occurs. After Rtmin the refractive index profile rises again toward Δ ≈ 0 %.

In accordance with an embodiment of the present disclosure, the inner cladding region (108i) may be down-doped. The inner cladding region (108i) may have the inner cladding relative refractive index (Δt). In particular, the inner cladding relative refractive index (Δt) may be derived from the inner cladding refractive index (n2). Moreover, the inner cladding relative refractive index (Δt) of the inner cladding region (108i) may be in a range of -0.36% to -0.7%. Further, the inner cladding relative refractive index (Δt) of the inner cladding region (108i) may be in a range of -0.5% to -0.7%. Furthermore, the inner cladding relative refractive index (Δt) can be determined as: Δt= $\frac{\left(n{2}^{2}-{\left(nsilica\right)}^{2}\right) ∗ \left(100%\right)}{2 n {2}^{2}}$, where nsilica is the refractive index of pure silica (1.45701 at 633 nm).

In accordance with an embodiment of the present disclosure, the inner cladding (108i) may have a down doped region(hereinafter interchangeably referred to and designated as a trench region (104)). In particular, the inner cladding radius (Rt) may be in a range of 15 µm to 20 µm. Moreover, the thickness of the inner cladding region (108i) may be in a range of 10 µm to 16 µm. The inner cladding region (108i) may have the minimum value of the inner cladding relative refractive index (Δtₘᵢₙ) at a radius range of 17 µm to 19 µm of the optical fiber (100). The minimum value of the inner cladding relative RI(Δt) may be optimized at the specified radial distance such that the optical fiber (100) achieves very low micro bending loss as well as ultra-low macro bend loss and enhanced waveguide properties in compliance with G.657.A2 and G.657.B3 standard.

In accordance with an embodiment of the present disclosure, the optical fiber (100) may exhibit an increase in cable cutoff wavelength when the thickness, inner cladding radius (Rt), trench shape and other parameters of the inner cladding region (108i) is different than the disclosed ranges and parameters of the present disclosure. Further, cable cut-off wavelength as used herein refers to a wavelength above which the optical fiber (100) will support and propagate only the desired mode of light. If the cable cut-off value of an optical fiber (100) is beyond the cable cut-off value, the optical fiber (100) may not be compatible with typical telecommunication applications. The cable cutoff wavelength, or cable cut off can be approximated by the 22 m cabled cutoff test described in EIA-455- 170 Cable Cutoff Wavelength of Single-mode Fiber by Transmitted Power, or "FOTP- 170". Cable cutoff, as used herein, means the value obtained using the approximated test.

In accordance with an embodiment of the present disclosure, the relative refractive index profile of the inner cladding region (108i) may be the alpha profile such that the inner cladding refractive index (n2) may be derived from the second alpha value (*α2*) of the peak shaping parameter (*α*). In particular, the second alpha value (*α2*) of the inner cladding region (108i) may be in a range of 2 to 5. Further, the inner cladding refractive index (n2) may further be dependent on a minimum refractive index value (n2min) (i.e., a minimum value of the inner cladding refractive index (n2)), the core radius (Rc), the inner cladding radius (Rt), the inner cladding relative refractive index (Δt), and the radial position (r) from a center of the optical fiber (100).

In an exemplary aspect of the present disclosure, the inner cladding refractive index (n2) at the radial distance (r) can be determined as: $n 2 \left(r\right) = n {2}_{min} {\left(1-2Δt{\left\{\frac{\left(r-Rt\right)}{\left(Rc-Rt\right)}\right\}}^{α 2}\right)}^{\frac{1}{2}} .$

In accordance with an embodiment of the present disclosure, the outer cladding region (108o) may be undoped. In particular, the outer cladding region (108o) may have an outer cladding relative RI(Δoc). The outer cladding relative RI(Δoc) may be derived from the outer cladding refractive index (n3). Moreover, the outer cladding relative RI(Δoc) can be determined as: Δoc= (n3-nsilica) *100 (%), where nsilica is the refractive index of pure silica. Further, the outer cladding relative RI(Δoc) may be zero. Alternatively, the outer cladding relative RI(Δoc) may be in a range of -0.01% to +0.01%.

In accordance with an embodiment of the present disclosure, the optical fiber (100) may have the core radius (Rc) equal to 4.42 µm, the core relative refractive index (Δc) equal to 0.36%, the inner cladding radius (Rt) equal to 17.2 µm, the inner cladding relative refractive index (i.e., trench relative refractive index) (Δt) equal to - 0.43%, the outer cladding radius (Roc) equal to 62.5 µm, the outer cladding relative refractive index (Δoc) equal to zero, the first alpha value (*α1*) equal to 5.2, the second alpha value (*α2*) equal to 2.4, the mode field diameter equal to 8.51 µm at 1310 nm, the cable cut-off wavelength equal to 1212.8 nm, a macro bend loss equal to 0.052 dB/turn at the bend radius of 5 mm and the wavelength of 1550 nm, a macro bend loss equal to 0.128 dB/turn at the bend radius of 5 mm and the wavelength of 1625 nm, a macro bend loss equal to 0.008 dB/turn at the bend radius of 7.5 mm and the wavelength of 1550 nm, a macro bend loss equal to 0.052 dB/turn at the bend radius of 7.5 mm and the wavelength of 1625 nm, a macro bend loss equal to 0.011 dB/turn at the bend radius of 10 mm and the wavelength of 1550 nm, a macro bend loss equal to 0.034 dB/turn at the bend radius of 10 mm and zero dispersion wavelength of 1304 nm. In general, zero Dispersion Wavelength (ZDW) as used herein is referred to as a wavelength at which the value of a dispersion coefficient is zero. In general, ZDW is the wavelength at which material dispersion and waveguide dispersion cancel one another.

In accordance with an embodiment of the present disclosure, the optical fiber (100) may have the core radius (Rc) equal to 4.35 µm, the core relative refractive index (Δc) equal to 0.375%, the inner cladding radius (Rt) equal to 18.4 µm, the inner cladding relative refractive index (i.e., trench relative refractive index) (Δt) equal to - 0.44%, the outer cladding radius (Roc) equal to 62.5 µm, the outer cladding relative refractive index (Δoc) equal to zero, the first alpha value (*α1*) equal to 6.4, the second alpha value (*α2*) equal to 3.1, the mode field diameter equal to 8.49 µm at 1310 nm, the cable cut-off wavelength equal to 1223.5 nm, a macro bend loss equal to 0.094 dB/turn at the bend radius of 5 mm and the wavelength of 1550 nm, a macro bend loss equal to 0.169 dB/turn at the bend radius of 5 mm and the wavelength of 1625 nm, a macro bend loss equal to 0.052 dB/turn at the bend radius of 7.5 mm and the wavelength of 1550 nm, a macro bend loss equal to 0.064 dB/turn at the bend radius of 7.5 mm and the wavelength of 1625 nm, a macro bend loss equal to 0.033 dB/turn at the bend radius of 10 mm and the wavelength of 1550 nm, a macro bend loss equal to 0.044 dB/turn at the bend radius of 10 mm and the wavelength of 1625 nm and zero dispersion wavelength of 1305 nm.

In accordance with an embodiment of the present disclosure, the optical fiber (100) may have the core radius (Rc) equal to 4.45 µm, the core relative refractive index (Δc) equal to 0.35%, the inner cladding radius (Rt) equal to 16.4 µm, the inner cladding relative refractive index (i.e., trench relative refractive index) (Δt) equal to - 0.415%, the outer cladding radius (Roc) equal to 40 µm, the outer cladding relative refractive index (Δoc) equal to zero, the first alpha value (*α1*) equal to 8.2, the second alpha value (α2) equal to 3.5, the mode field diameter equal to 8.52 µm at 1310 nm, the cable cut-off wavelength equal to 1231.1 nm, a macro bend loss equal to 0.038 dB/turn at the bend radius of 5 mm and the wavelength of 1550 nm, a macro bend loss equal to 0.17 dB/turn at the bend radius of 5 mm and the wavelength of 1625 nm, a macro bend loss equal to 0.005 dB/turn at the bend radius of 7.5 mm and the wavelength of 1550 nm, a macro bend loss equal to 0.028 dB/turn at the bend radius of 7.5 mm and the wavelength of 1625 nm, a macro bend loss equal to 0.022 dB/turn at the bend radius of 10 mm and the wavelength of 1550 nm, a macro bend loss equal to 0.06 dB/turn at the bend radius of 10 mm and zero dispersion wavelength of 1304.15 nm.

In accordance with an embodiment of the present disclosure, the optical fiber (100) may have the core radius (Rc) equal to 4.48 µm, the core relative refractive index (Δc) equal to 0.355%, the inner cladding radius (Rt) equal to 17 µm, the inner cladding relative refractive index (i.e., trench relative refractive index) (Δt) equal to - 0.37%, the outer cladding radius (Roc) equal to 40 µm, the outer cladding relative refractive index (Δoc) equal to zero, the first alpha value (*α1*) equal to 8.2, the second alpha value (*α2*) equal to 2.8, the mode field diameter equal to 8.53 µm at 1310 nm, the cable cut-off wavelength equal to 1222.1 nm, a macro bend loss equal to 0.032 dB/turn at the bend radius of 5 mm and the wavelength of 1550 nm, a macro bend loss equal to 0.14 dB/turn at the bend radius of 5 mm and the wavelength of 1625 nm, a macro bend loss equal to 0.022 dB/turn at the bend radius of 7.5 mm and the wavelength of 1550 nm, a macro bend loss equal to 0.082 dB/turn at the bend radius of 7.5 mm and the wavelength of 1625 nm, a macro bend loss equal to 0.024 dB/turn at the bend radius of 10 mm and the wavelength of 1550 nm, a macro bend loss equal to 0.052 dB/turn at the bend radius of 10 mm and zero dispersion wavelength of 1303.7 nm.

In accordance with an embodiment of the present disclosure, the optical fiber (100) may have a glass diameter of less than or equal to 125±0.3 µm, a core radius (Rc) of the core region (102) may be less than or equal to 4.5 µm, a thickness of the inner cladding region (108i) may be less than or equal to 13 µm, and the minimum inner cladding relative refractive index (i.e., trench relative RI) (Δtₘᵢₙ) of the inner cladding region (108i) may be in a range of -0.36% to -0.7%. In other embodiment of the disclosure, the minimum inner cladding relative refractive index (Δtₘᵢₙ) of the inner cladding region (108i) may be in a range of -0.5% to -0.7%. The first alpha value (*α1*) of the core region (102) may be in range of 4 to 9 and the second alpha value (*α2*) of the inner cladding region (108i) may be in a range of 2 to 5. The optical fiber (100) may be designed in such a way having the combination of radial parameters of the core region (102), the inner cladding region (108i) and the values of peak shaping parameter (*α*) such that the optical fiber (100) meets and exceeds the waveguide parameters and optical parameters of ITU-T G.657.B3.

In accordance with an embodiment of the present disclosure, the trench relative RI varies from 0 to -0.2% between a trench thickness of being 0 to 4 µm respectively in a radial outward direction, and -0.2% to minimum trench relative RI (Δtₘᵢₙ)(i.e., between -0.36% to -0.7%) between trench thickness of being 4 to 11.8 microns respectively in a radial outward direction. Dependent on above where trench RI profile is defined by a trench slope such that the trench slope between trench thickness of 0 to 4 microns is greater than the trench slope between trench thickness of 4 to 11.8 microns. The relationship of above RI variation and slope is important while designing the optical fiber (100) to be made using fluorination technique so that the optical fiber (100) can obtain a very low macro bend and micro bend loss. Because the trench region (104) is formed using Fluorine deposition technique directly on the core region (102), the trench parameters such as shape, trench relative RI, gradual variation of RI, minimum trench relative RI (Δtₘᵢₙ)and the radial position of minimum trench relative RI (Δtₘᵢₙ) is important to achieve bend insensitive fiber.

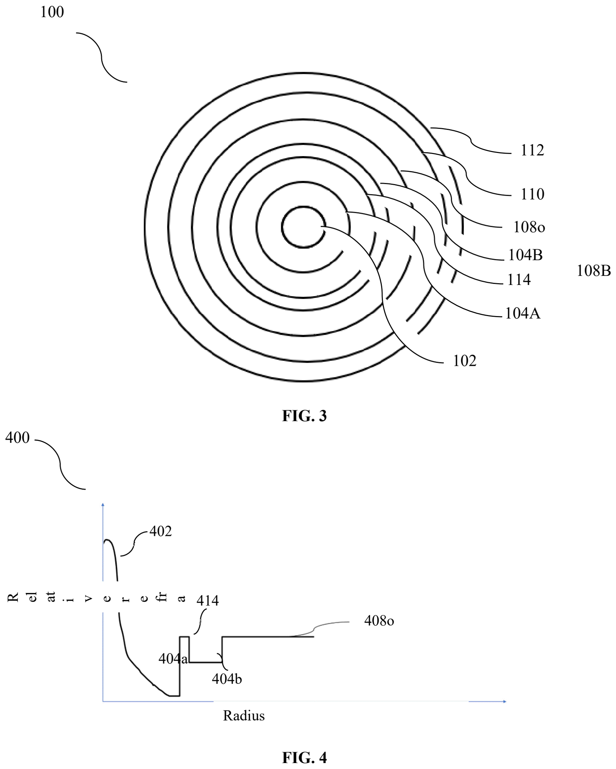

Fig. 3 illustrates an optical fiber (100) comprising a core region (102), a first trench region (104A), a second trench region (104B), an outer cladding region (108o), a primary coating layer (110), a secondary coating layer (112) and a pure silica clad region (114) between the first trench region (104A) and the second trench region (104B).In an embodiment of the disclosure, the first trench region (104A) and second trench region (104B), outer cladding region (108o), and the pure silica clad region (114) combines to make a cladding region(108B). In particular, the first trench region (104A) is defined by a first trench relative RI between -0.36% to -0.7% and the second trench region (104B) is defined by a second trench relative RI between -0.25% to -0.45%. Moreover, the thickness of the first trench region (104A) is between 10 µm to 16 µm . Further, the thickness of the first trench region (104A) and the second trench region (104B) may be substantially similar with a tolerance of ± 2 µm. Furthermore, the thickness of the pure silica region (114) is between 2 µm to 6 µm. The waveguide parameters of the core region (102), the first trench region (104A) and outer cladding region (108o) is similar to the first embodiment of the disclosure.

Fig. 4 illustrates RI profile 400 of the optical fiber(100) in Fig. 3. In particular,the RI profile (400) of the optical fiber (100) incorporates a core region RI profile (402), a first trench region RI profile (404a) adjacent to the core region RI profile (402), a second trench region RI profile (404b)which is separated by a pure silica region RI profile (414) between the first trench region RI profile (404a) and the second trench region RI profile (404b). Moreover, the pure silica region RI profile (414) surrounding the first trench region RI profile (404a) ensures that the light is efficiently confined within the core region (102) while the second trench region RI profile (404b) enhances bend-insensitivity of the optical fiber (100) and minimizes attenuation. Further, the second trench region RI profile (404b) is surrounded by an un-doped outer cladding region RI profile (408o). In cases where the secondary coating layer(112) is a pure silica region, it ensures that the low RI region transitions smoothly into a material with a higher refractive index contrast, which enhances bend-insensitive properties of the optical fiber (100). Alternatively, when the secondary coating layer (112) of the optical fiber (100) is down doped, several design possibilities arise.

In accordance with an embodiment of the present disclosure, in the case of the optical fiber (100) with reduced diameter, the cladding region (108) in entirety can be down-doped with a down dopant, such as fluorine, creating a uniform low RI region across the cladding region (108). This design improves the performance of the optical fiber (100) by maintaining bend insensitivity even with smaller fiber diameters.

Another variation of the design involves multiple low RI regions within the cladding (108B), where one of these regions is placed on the outermost side of the glass portion of the optical fiber (100). This configuration allows for enhanced control over the refractive index profile, improving the ability of the optical fiber (100) to resist bend-related losses while maintaining optimal light guidance. This multi-region trench structure contributes to the overall performance, providing a balanced combination of low macro bend and micro bend losses, even in optical fiber (100) with smaller diameters.

In accordance with an embodiment of the present disclosure, the up-doped is referred to as addition of doping materials to facilitate increase in the refractive index of a particular layer or part of optical fiber (100). The materials configured to facilitate up-doping are known as up-dopants. Specifically, the up dopant as used herein is one of Germanium and/or Chlorine. In particular, the down-doped is referred to as addition of doping materials to facilitate decrease in the refractive index of a particular layer or part of optical fiber (100). The materials configured to facilitate down-doping are known as down-dopants. Moreover, at least one down dopant as used herein is Fluorine. The un-doped is referred to as a material that is not intentionally doped, or which is pure silica. However, there are always chances of some diffusion of dopants in the region which is negligible.

In general, the trench is referred to as a down-doped region with a higher down-dopant concentration to decrease the refractive index of the down-doped region with respect to pure silica.

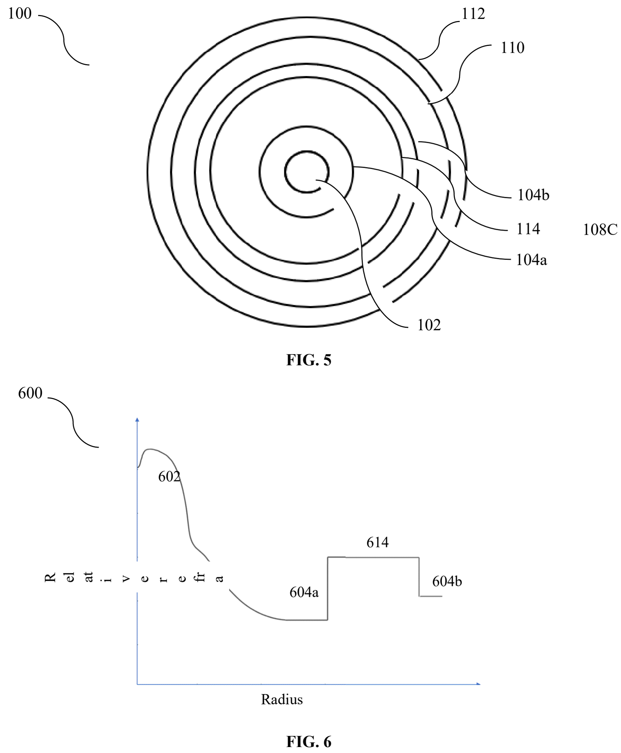

Fig. 5 illustrates an optical fiber (100) comprising the core region (102), the inner trench region (104a), the primary coating layer (110), the secondary coating layer (112), the pure silica clad region (114), a peripheral trench region (104b). The inner trench region (104a), the pure silica clad region (114), the peripheral trench region (104b) combinedly makes a cladding region (108C). In particular, the peripheral trench region (104b) is referred to as the outermost cladding region of the optical fiber (100).

In an optical fiber (100) with reduced diameter, the thickness of the peripheral trench region(104b) is less so it is doped with Fluorine till the end of the glass region of the optical fiber (100) to significantly improve leakage loss and micro bending loss. Further, the down doping of the peripheral trench region (104b) of the cladding region (108C) helps in increasing the mechanical strength of the optical fiber (100).

In accordance with an embodiment of the present disclosure, the inner trench region (104a) is defined by an inner trench relative RI between -0.36% to -0.7% and the peripheral trench region (104b) is defined by a peripheral trench relative RI between -0.15% to -0.45%. The thickness of the inner trench region (104a) is between 10 µm to 16 µm . The thickness of the pure silica region (114) is between 15µm to 22µm. The waveguide parameters of the core region (102) and the inner trench region (104a) may be similar to the first embodiment of the disclosure.

In general, the leakage loss is to as loss due to mode leak in an optical fiber (100)that adds to an attenuation of the optical fiber (100). The leakage loss is calculated using a finite element analysis method where the losses are calculated in the optical fiber (100) in straight condition.

Fig.6 illustrates the RI profile (600) of the optical fiber(100) illustrated in Fig. 5. This optical fiber (100) design features a unique structure with an inner trench region RI profile(604a) adjacent to the core region RI profile (602) and a peripheral trench region RI profile (604b) located on the outer periphery of the cladding region (108C). Importantly, after the peripheral trench region RI profile (604b), there is no pure silica or undoped region in the glass portion of the optical fiber (100), which differentiates it from traditional designs. The presence of the peripheral trench region RI profile (604b) in the cladding region (108C), which is down-doped, significantly enhances the mechanical strength of the optical fiber (100), especially at its outer regions. The down doping in the periphery increases the overall strength of the glass fiber by reinforcing the cladding region (108C), making it more resilient to external stresses and potential damage during installation or operation.

In accordance with an embodiment of the present disclosure, the down doping in the peripheral trench region (104b) also reduces the leakage loss of the optical fiber (100). This is because the down-doped trench minimizes the amount of light that escapes from the core region (102) and the cladding region (108C) of the optical fiber (100), thus ensuring more efficient light confinement and reduced signal loss.

In accordance with an embodiment of the present disclosure, the thickness of the peripheral trench region (104b) is carefully controlled to be between 4µm to 6µm. This thickness allows for an effective reduction in leakage loss while maintaining the necessary balance between strength and optical performance. Thus, it improves both the mechanical robustness of the optical fiber (100) and its optical efficiency, especially in applications where low bend loss and high strength are essential, when the diameter of the optical fiber (100) is less than 80µm.

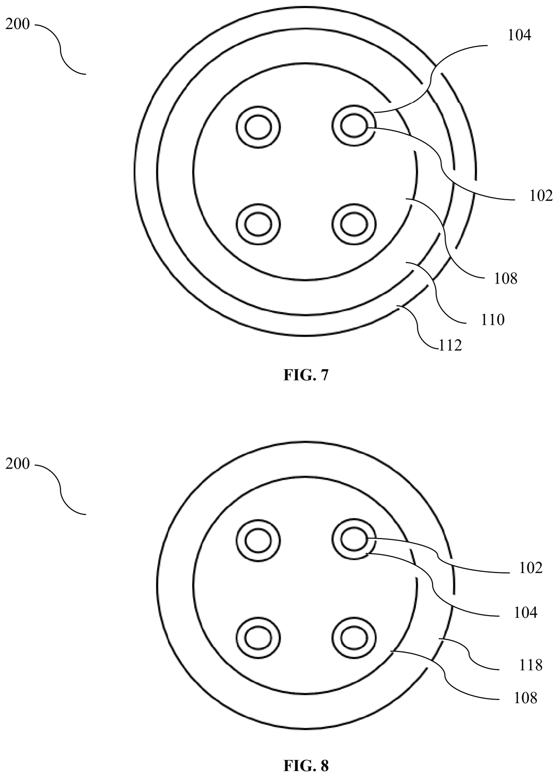

Fig. 7 illustrates a multi core optical fiber (200) comprising a plurality of core region (102), a plurality of inner trench region (104) surrounding each core regions of the plurality of core region (102), a glass cladding region (108), a primary coating layer (110), a secondary coating layer (112). The design of the multicore fiber (200) (MCF) , depicted in Fig. 7, shows the multicore optical fiber (200) with the plurality of core region (102) (for example, four cores) formed within the glass cladding region (108). Moreover, the plurality of core region (102) surrounded by the plurality of inner trench region (104) are crucial for isolating the plurality of core region (102) from each other. Further, the plurality of core region(102) and the plurality of inner trench region (104) are formed in a single step during the manufacturing of the core glass preform, which helps maintain precise control over the structure of the multicore optical fiber (200) and ensures uniformity in the core formation. Furthermore, the plurality of inner trench region (104) provides physical separation between the plurality of core region (102), allowing for efficient light propagation within each core while preventing interference and crosstalk between the plurality of the core region (102). The waveguide parameters of the plurality of core region (102) and the plurality of inner trench region (104) is similar to the first embodiment of the disclosure.

Fig. 8 illustrates a multicore optical fiber (200) comprising a plurality of core region (102), a plurality of trench region (104) surrounding each core regions of the plurality of core region (102), a glass cladding region (108) similar to the multicore optical fiber (200) of the Fig. 7, and a single coating layer (118) surrounding the glass cladding region (108). In particular, the single coating (118) serves the combined functions of both the primary coating and secondary coating layers as well as the ink layer, simplifying the structure of the multicore optical fiber (200) while still providing the necessary protection and durability. The ability of the single coating layer (118) to replace multiple protective layers streamlines the manufacturing process, reduces material usage, and ensures that the multicore optical fiber (200) remains lightweight and efficient while still being adequately shielded from environmental factors that could damage the multicore optical fiber (200). Further, the waveguide parameters of the plurality of the core region (102) and the plurality of trench region (104) are similar to the first embodiment of the disclosure.

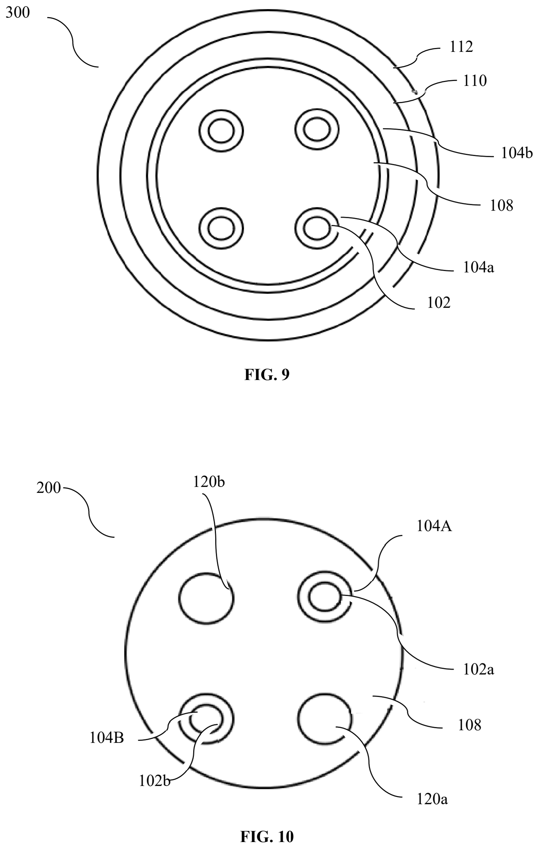

Fig. 9 illustrates a multicore optical fiber (200) comprising a plurality of core region (102), a plurality of inner trench region (104a) surrounding each core regions of the plurality of core region (102), the glass cladding region (108), a peripheral trench region (104b) formed on the outer periphery of the glass cladding region (108), the primary coating layer (110) surrounding the glass cladding region (108), the secondary coating layer (112) surrounding the primary coating layer (110). As shown in Fig. 9, the plurality of inner trench regions (104a) serves as an additional buffer, preventing light from escaping the plurality of core region (102) and ensuring that each core maintains its light guidance properties. In particular, the peripheral trench region (104b) also surrounds the glass cladding (108), which isolates the plurality of core region (102) from the outside environment and minimizes potential leakage losses. The configuration of the multicore optical fiber (200), with the plurality of inner trench region (104a), plays a significant role in improving the performance of the multicore optical fiber (200), especially when it comes to reducing bending losses and maintaining stable light transmission even when the multicore optical fiber (200) is subjected to stress or tight bends. Moreover, the waveguide parameters of the plurality of core region (102) and the plurality of inner trench region (104a) are similar to the first embodiment of the disclosure. Further, the waveguide parameters of the peripheral trench region (104b) is similar to the third embodiment of the disclosure.

Fig. 10 illustrates a multicore optical fiber (200) comprising a plurality of core region (102a, 102b), a plurality of inner trench region (104A, 104B) surrounding the plurality of core region (102a, 102b), a plurality of non-trenched core region (120a, 120b), a glass cladding region (108). In the case the multicore optical fiber (200) with the plurality of inner trench region (104A, 104B) as deep trench regions, the plurality of inner trench region (104A, 104B) can significantly reduce crosstalk between the plurality of core region (102a, 102b), even when the distance between the centers of the plurality of core region (102a, 102b) (referred to as the pitch) is small.

As depicted in Fig. 10, an alternative trench configuration can be employed in which the plurality of inner trench region (104A, 104B) surround the plurality of core region (102a, 102b) in an alternative fashion where one of the plurality of core region (102a, 102b) is surrounded by one of the plurality of inner trench region (104A, 104B). In particular, the plurality of non-trenched core region (120a, 120b) is disposed adjacent to the plurality of core region (102a, 102b). Moreover, the plurality of non-trenched core region (120a, 120b)is obtained from core glass preform not having any down doping. Further, the plurality of the core region (102a, 102b) has waveguide parameters similar to the first embodiment of the disclosure. This arrangement ensures that each of the plurality of core region (102a, 102b) is effectively isolated from every other of the plurality of core region (102a, 102b), significantly reducing the risk of signal interference or crosstalk.

In accordance with an embodiment of the present disclosure, the deep trench configuration enhances the ability of the multicore optical fiber (200) to transmit data with minimal cross-talk, making it highly suitable for applications that require high-density data transmission without the risk of signal degradation between the plurality of core region (102a, 102b). This design ensures that the multicore optical fiber (200) can perform efficiently even when the plurality of core region (102a, 102b) are positioned closely together, offering a solution for high-capacity networks where minimizing crosstalk is essential.

In accordance with an embodiment of the present disclosure, the multicore fibre preform is an optical fibre preform that is used to manufacture a multi-core optical fibre (200). In particular, the multicore fibre preform is obtained from a preform assembly which includes a plurality of core rods, a marker rod (optional) a solid glass tube having plurality of core holes, and a marker hole (optional) along the longitudinal length of the solid glass tube. Moreover, the glass tube may be pure silica (act as cladding) or the glass tube may have one or more trench regions as well or the glass tube may have a peripheral trench region.

The method includes insertion of core rods as disclosed in the present disclosure in the plurality of core holes and any type of marker rod (optional) known in the art inside the marker hole (optional). Further, the core rod is manufactured by stretching and elongating the core glass preform.

The core rod comprises both a core region (102) and a trench region (104) surrounding the core region (102) as disclosed in different embodiments of the disclosure. The core rod comprises a core region (102) and a pure silica region surrounding the core region (102) as disclosed in Fig. 10. Moreover, the method includes a step of either collapsing or simultaneous collapsing and stretching of the stacked preform assembly to manufacture the multicore fibre preform. Further, the method includes a step of cone formation at one end of the multicore fibre preform and will be taken to a draw tower for drawing the multicore optical fibre (200) from a multicore optical fibre preform.

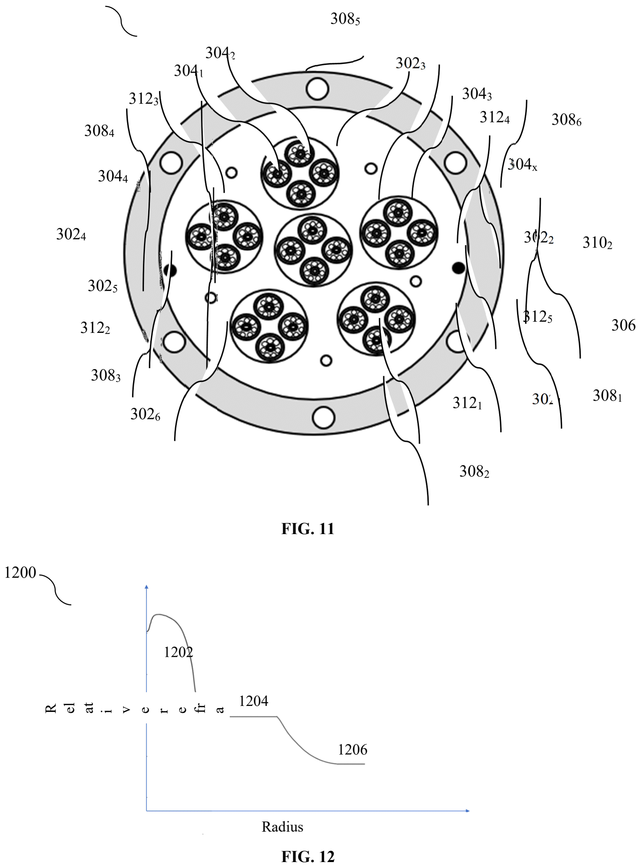

Fig. 11 illustrates a multicore optical fiber cable (300) may be a ribbon fiber cable. More specifically, the multicore optical fiber cable (300) may be an intermittent bonded ribbon (IBR) fiber cable. In particular, an attenuation of the multicore optical fiber cable (300) may be less than or equal to 0.25 dB/km at the wavelength 1310 nm. Alternatively, the attenuation of the multicore optical fiber cable (300) may be less than or equal to 0.4 dB/km at the wavelength of 1550 nm.

The multicore optical fiber cable (300) may have a plurality of buffer tube (302₁, ..., 302ₙ). Although Fig. 11 illustrates that the plurality of buffer tube (302₁, ..., 302ₙ) has six buffer tubes (302₁, 302₂, 302₃, 302₄, 302₅, 302₆), it will be apparent to a person skilled in the art that the scope of the present disclosure is not limited to it. In various other aspects, the plurality of buffer tube (302₁, ..., 302ₙ)may have any number of buffer tubes, without deviating from the scope of the present disclosure. In such a scenario, each buffer tube (302ₓ) of the plurality of buffer tube (302₁, ..., 302ₙ) may be structurally and functionally similar to six of the plurality of buffer tube (302₁, ..., 302ₙ) (i.e., 302₁, 302₂, 302₃, 302₄, 302₅, 302₅) as described herein

In accordance with an embodiment of the present disclosure, the plurality of buffer tube (302₁, ..., 302ₙ) may have a plurality of optical fiber ribbon (304₁, ..., 304ₙ). In particular, the plurality optical fiber ribbon (304₁, ..., 304ₙ) may comprise one or more intermittently bonded ribbons (IBRs) . Although Fig. 11 illustrates that the plurality of buffer tube (302₁, ..., 302ₙ) has twenty-four of the plurality of optical fiber ribbon (304₁, ..., 304ₙ) (i.e.,304₁, ..., 304₂₄), it will be apparent to a person skilled in the art that the scope of the present disclosure is not limited to it. In various other aspects, the plurality of buffer tube (302₁, ..., 302ₙ) may have any number of optical fiber ribbons, without deviating from the scope of the present disclosure. In such a scenario, each optical fiber ribbon(304ₓ) of the plurality of optical fiber ribbon (304₁, ..., 304ₙ)may be structurally and functionally similar to the twenty-four of the plurality of optical fiber ribbon (304₁, ..., 304ₙ)(i.e.,304₁, ..., 304₂₄) as described herein.

In accordance with an embodiment of the present disclosure, each buffer tube (302ₓ) of the plurality of buffer tubes (302₁, ..., 302ₙ)has four of the plurality of optical fiber ribbon(304₁, ..., 304ₙ) (for example the first buffer tube (302₁) is shown to have the optical fiber ribbon (304₁, 304₂, 304₃,304₄)), it will be apparent to a person skilled in the art that the scope of the present disclosure is not limited to it. In various other aspects, each buffer tube (302ₓ) of the plurality of buffer tube (302₁, ..., 302ₙ)may have any number of optical fiber ribbons, without deviating from the scope of the present disclosure. In such a scenario, each optical fiber ribbon (304ₓ)of the plurality of optical fiber ribbon (304₁, ..., 304ₙ) may be structurally and functionally similar to the twenty-four of the plurality of optical fiber ribbon (304₁, ..., 304ₙ) (i.e.,304₁, ..., 304₂₄)as described herein.

Further, each optical fiber ribbon(304ₓ) may have a plurality of optical fibers (100₁, ..., 100ₙ). Each optical fiber (100ₓ) of the plurality of optical fibers (100₁, ..., 100ₙ) may have one or more structural and functional properties same as the optical fiber (100). In some aspects of the present disclosure, each optical fiber (100ₓ) of the plurality of optical fibers (100₁, ..., 100ₙ) may be the same as the optical fiber (100). Each optical fiber ribbon (302ₓ) may have a plurality of multicore optical fibers (200₁, ..., 200ₙ).

In accordance with an embodiment of the present disclosure, the optical fiber cable (300) may have a sheath (306) that surrounds the plurality of buffer tubes (302). Particularly, the sheath (306) may be adapted to act as an outermost covering for the optical fiber cable (300) such that the sheath (306) facilitates in reduction of abrasion and to provide the optical fiber cable (300) with extra protection against external mechanical effects such as crushing, and the like. In particular, the sheath (306) may be made up of a material such as, but not limited to, a synthetic plastic material, a natural plastic material, and the like. Aspects of the present disclosure are intended to include and/or otherwise cover any type of material for the sheath (306), known to a person of ordinary skill in the art, without deviating from the scope of the present disclosure.

In accordance with an embodiment of the present disclosure, the sheath (306) may have a plurality of strength members (308₁, ..., 308ₙ) that may be partially or completely embedded in the sheath (306). Particularly, the plurality of strength members (308₁, ..., 308ₙ) may be adapted to provide strength to the optical fiber cable (300) that may be required during an installation process of the optical fiber cable (300). Further, the plurality of strength members (308₁, ..., 308ₙ) may be adapted to provide the majority of structural strength and support to the optical fiber cable (300). Furthermore, the plurality of strength members (308₁, ..., 308ₙ) may enhance the tensile strength of the optical fiber cable (300), which is highly desirable during the installation process.

Although FIG. 11 illustrates that the plurality of strength members (308₁, ..., 308ₙ) has six strength members (i.e., 308₁, 308₂, 308₃, 308₄, 308₅, 308₆), it will be apparent to a person skilled in the art that the scope of the present disclosure is not limited to it. In various other aspects, the plurality of strength members (308₁, ..., 308ₙ) may have any number of strength members, without deviating from the scope of the present disclosure. In such a scenario, each strength member (308ₓ) of the plurality of strength members (308₁, ..., 308ₙ) may be structurally and functionally similar to the six strength members of the plurality of strength member (308₁, ..., 308ₙ)(i.e., 308₁, 308₂, 308₃, 308₄, 308₅, 308₆) as described herein.

In accordance with an embodiment of the present disclosure, the optical fiber cable (300) may have a plurality of ripcord (310₁, ..., 310ₙ). In particular, the plurality of ripcord (310₁, ..., 310ₙ) may facilitate ripping, tearing, or opening up of the optical fiber cable (300). Moreover, the plurality of ripcord (310) may facilitate the ripping, tearing, or opening up of the optical fiber cable (300) to access the plurality of strength members (308₁, ..., 308ₙ) from the sheath (306).

Although Fig. 11 illustrates that the plurality of ripcord (310₁, ..., 310ₙ) has two ripcords (i.e., 310₁ and 310₂), it will be apparent to a person skilled in the art that the scope of the present disclosure is not limited to it. In various other aspects, the plurality of ripcord (310₁, ..., 310ₙ) may have any number of ripcords, without deviating from the scope of the present disclosure. In such a scenario, each ripcord (310ₓ) of the plurality of ripcord (310₁, ..., 310ₙ) may be structurally and functionally similar to two of the plurality of ripcord (310₁, ..., 310ₙ) (i.e., 310₁ and 310₂) as described herein.

In accordance with an embodiment of the present disclosure, the optical fiber cable (300) may have a plurality of water swellable yarn (312₁, ..., 312ₙ). In particular, the plurality of water swellable yarn (312₁, ..., 312ₙ) may provide water resistance to the plurality of optical fiber (100₁, ..., 100ₙ) inside the optical fiber cable (300) by restricting penetration of water inside the optical fiber cable (300).

Although Fig. 11 illustrates that the plurality of water swellable yarn (312₁, ..., 312ₙ) has five of the plurality of water swellable yarn (312₁, ..., 312ₙ) (i.e., 312₁, 312₂, 312₃, 312₄, 312₅), it will be apparent to a person skilled in the art that the scope of the present disclosure is not limited to it. In various other aspects, the plurality of water swellable yarn(312₁, ..., 312ₙ) may have any number of water swellable yarn, without deviating from the scope of the present disclosure. In such a scenario, each water swellable yarn (312ₓ)of the plurality of water swellable yarn(312) may be structurally and functionally similar to the fivewater swellable yarn (WSY) of the plurality of water swellable yarn(312₁, ..., 312ₙ) (i.e., 312₁, 312₂, 312₃, 312₄, 312₅)as described herein.

Fig. 12 illustrates the RI profile (1200) of an optical fiber(100). The design of the optical fiber (100) features a single trench region (106) positioned at the periphery of the optical fiber (100), with the peripheral end of the fiber being down-doped instead of having any pure silica region. A core region (102) is surrounded by a pure silica region (104), which ensures that the light guiding properties of the core region (102)are maintained effectively. The core region RI profile (1202) has a relative RI between 0.35% to 0.5%. The low refractive index (RI) region, or the single trench region RI profile (1206), has a relative RI range between -0.36% and -0.7%, which helps in providing bend insensitivity and reducing macro bend losses in the optical fiber (100). The single trench region (106) has a peripheral trench thickness between 10 µm to 20 µm. The waveguide parameters of the core region (102) are similar to the waveguide parameters of the core region (102) disclosed in different embodiments of the disclosure. Further, referring to Fig. 12, the core region (102) is surrounded by the pure silica region (104). The pure silica region RI profile (1204) has a constant value of relative refractive index up to the thickness of the pure silica region (104). The pure silica region (104) is then surrounded by the single trench region (104) with the single trench region RI profile (1206).

In the case of the optical fiber (100) with reduced diameter , particularly those with a glass diameter of less than 60 micrometres, the position of the trench is particularly critical. The trench, positioned on the outer periphery of the optical fiber (100), plays a key role in ensuring that the optical fiber (100) retains its bend-insensitive characteristics despite its smaller cross-sectional size. This configuration is especially important for high-performance applications where maintaining low attenuation and minimal bend loss is crucial, even for the optical fiber (100) with smaller diameter. Additionally, this trench design can be applied to the optical fiber (100) with a standard glass diameter, where the optical fiber (100) may still benefit from a peripheral deep trench, optimizing its performance in terms of bend resistance and light confinement.

In accordance with an embodiment of the present disclosure, the optical fiber (100) with a bend-insensitive sophisticated design to minimize bend-induced losses, ensures efficient signal transmission even in tight bending conditions. The core region (102) of the optical fiber (100) exhibits a gradual decrease in relative refractive index (RI) from the center outward, with a core relative RI ranging between 0.35% to 0.5%. This gradual reduction helps maintain signal integrity. The core-clad interface, which spans from 4.5 to 5.5 microns from the center, is precisely defined to optimize light confinement. Surrounding the core region (102) is a trench region (104) with a negative relative RI difference, varying from -0.36% to -0.7%, structured in two distinct layers. Further, the trench region (104)is crucial for redistributing light and reducing the impact of bending on signal loss.

In accordance with an embodiment of the present disclosure, the glass diameter of the optical fiber (100) ranges between 80 to 125 microns, and the optical fiber (100) with coated diameter extends from 140 to 250 microns, providing protection and durability.

In accordance with an embodiment of the present disclosure, mode field diameter (MFD), which governs how light propagates within the fiber, lies between 8.2µm to 9 µm, ensuring effective light confinement.

In accordance with an embodiment of the present disclosure, the design of the optical fiber (100) ensures very low macro bend losses i.e., less than or equal to 0.15 dB/turn at 1550 nm and 5 mm bend radius, and less than or equal to 0.45 dB/turn at 1625 nm with the same bend radius. Additionally, at a larger bend radius of 7.5 mm, the macro bend loss further decreases, demonstrating resilience of the optical fiber (100) to bending. Micro bend losses are also kept under 0.5dB at 1550 nm, highlighting the ability of the optical fiber (100) to withstand small deformations without significant signal degradation. While the leakage loss value is less than or equal to 0.01 dB/km at 1550 nm, the overall design ensures minimal light escape, maximizing efficiency. Thus, the optical fiber (100) is particularly suited for applications in telecommunications and optical networks where tight bending can often compromise signal quality.

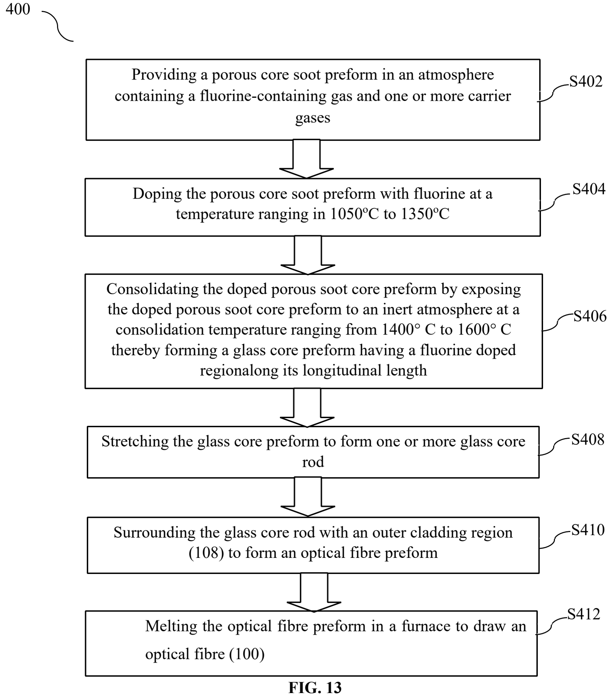

Fig. 13 illustrates a flow chart for a method (400) of manufacturing an optical fiber (100) in accordance with an embodiment of the disclosure. The method (400) comprises the following steps, firstly providing a porous core soot preform in an atmosphere containing a fluorine-containing gas and one or more carrier gases (S402), where the porous core soot preform having at least one core region (102) and a cladding region (108). After that doping the porous core soot preform with fluorine at a temperature ranging in 1050 °C to 1350 °C (S404). After that consolidating the doped porous soot core preform by exposing the doped porous soot core preform to an inert atmosphere at a consolidation temperature ranging from 1400° C to 1600° C, thereby forming a glass core preform having the at least one core region (102) and a fluorine doped region along its longitudinal length (S406), where a trench region (104) is obtained by fluorine doping having a trench relative refractive index (Δt) ranging from -0.36% to -0.7%.

After that stretching the glass core preform to form one or more glass core rod (S408). After that surrounding the glass core rod with an outer cladding region (108) to form an optical fibre preform (S410). Finally, melting the optical fibre preform in a furnace to draw an optical fibre (100) (S412).

In accordance with an embodiment of the present disclosure, a number of techniques are used for making the optical fiber (100) (modified chemical vapor deposition (MCVD), plasma chemical vapor deposition (PCVD), vapor axial deposition (VAD), etc.), one of the most common methods of making optical fiber (100) is the outside vapor deposition (OVD) process. In the OVD process, silica and doped silica particles are pyrogenically generated in an oxygen flame. Soot preforms are formed layer-by-layer by deposition of vapors and particles on a rotating cylindrical target rod by traversing the soot-laden flame along the axis of the cylindrical target. Further, the porous soot preform thus formed are subsequently treated with a drying agent (e.g., chlorine) for removal of water and metal impurities and are sintered into glass blanks at temperatures ranging from 1100°C to 1500°C. The sintered glass blanks are then drawn into the optical fiber (100) of 125 µm diameter for their use in telecommunication systems.

In accordance with an embodiment of the present disclosure,the glass core preform is stretched to form one or more glass core rod. The glass core rod comprises a core region (102) and an inner cladding region (108i) down doped (i.e., trench region (104)) (best shown in Fig. 1).

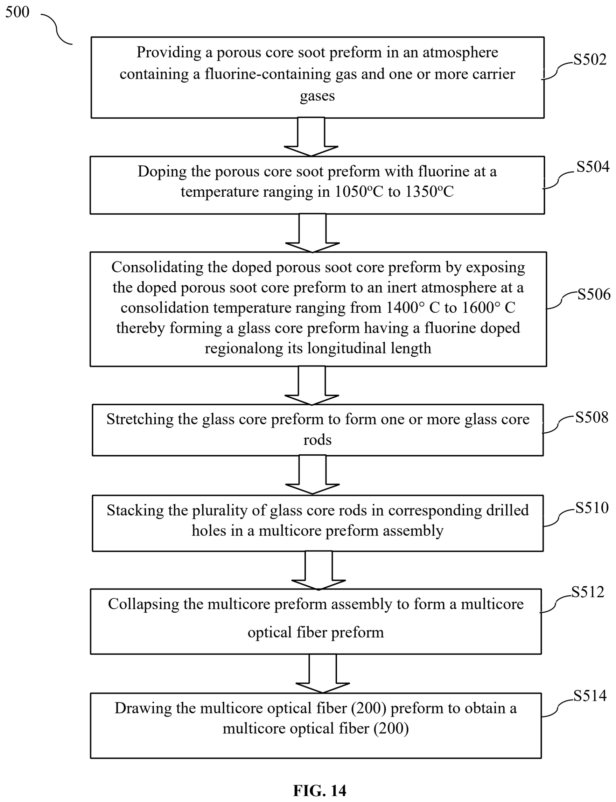

Referring to Fig. 14, a flow chart for a method (500) of manufacturing a multicore optical fiber (200) in accordance with an embodiment of the disclosure. The method (500) comprises the following steps, firstly providing a porous core soot preform in an atmosphere containing a fluorine-containing gas and one or more carrier gases (S502), where the porous core soot preform having at least one core region (102) and a cladding region (108). After that doping the porous core soot preform with fluorine at a temperature ranging in 1050 °C to 1350 °C (S504). After that consolidating the doped porous soot core preform by exposing the doped porous soot core preform to an inert atmosphere at a consolidation temperature ranging from 1400° C to 1600° C, thereby forming a glass core preform having the at least one core region (102) and a fluorine doped region along its longitudinal length (S506), where a trench region (104) is obtained by fluorine doping having a trench relative refractive index (Δt) ranging from -0.36% to -0.7%.

After that stretching the glass core to form a plurality of glass core rods (S508). After that stacking the plurality of glass core rods in corresponding drilled holes in a multicore preform assembly (S510). After that collapsing the multicore preform assembly to form a multicore optical fiber (200) preform (S512). Finally,drawing the multicore optical fiber (200) preform to obtain a multicore optical fiber (200) (S514).

In accordance with an embodiment of the present disclosure,a number of techniques are used for making the optical fiber (100) (modified chemical vapor deposition (MCVD), plasma chemical vapor deposition (PCVD), vapor axial deposition (VAD), etc.), one of the most common methods of making optical fiber (100) is the outside vapor deposition (OVD) process. In the OVD process, silica and doped silica particles are pyrogenically generated in an oxygen flame. Soot preforms are formed layer-by-layer by deposition of vapors and particles on a rotating cylindrical target rod by traversing the soot-laden flame along the axis of the cylindrical target. The porous soot preform thus formed are subsequently treated with a drying agent (e.g., chlorine) for removal of water and metal impurities and are sintered into glass blanks at temperatures ranging from 1100°C to 1500°C. The sintered glass blanks are then drawn into the optical fiber (100) of 125 mm diameter for their use in telecommunication systems.

In accordance with an embodiment of the present disclosure, the glass core preform is stretched to form one or more glass core rod. The glass core rod comprises a core region (102) and an inner cladding region (108i) down doped (i.e., trench region (104)) (best shown in Fig. 1).

In accordance with an embodiment of the present disclosure, the optical fiber (100, 200) comprises at least one core region (102) having a core relative refractive index (RI) (Δc) in the range of 0.15% to 0.45%, where the core region (102) is configured to guide optical signals via total internal reflection and a cladding region (108) surrounding the at least one core region (102). In particular, the cladding region (108) comprises a first low RI region adjacent to the at least one core region (102), the first low RI region being defined by a first trench relative RI (Δt1) in the range of -0.36% to -0.7% and a second low RI region separated from the first low RI region by a pure silica region, the second low RI region being defined by a second trench relative RI (Δt2) in the range of -0.25% to -0.45%. Moreover, the first low RI region and the second low RI region are configured to collectively contribute to reducing bend losses of the optical fiber (100, 200), where the bend losses of the optical fiber (100, 200) are less than or equal to 0.15 dB/turn at a bend radius of 5 mm and a wavelength of 1550 nm.

In accordance with an embodiment of the present disclosure, the multicore optical fiber (200) comprises a plurality of core regions (102), each core region (102) having a core relative RI (Δc) in the range of 0.15% to 0.45%, where each core region (102) is configured to guide optical signals via total internal reflection. In particular, cladding region (108) surrounding the plurality of core regions (102) such that the cladding region (108) comprises a low RI region (104a) adjacent to a corresponding core region (102) and defined by a trench relative RI (Δt) in the range of -0.36% to -0.7% and a peripheral low RI region (104b) located at the outer periphery of the cladding region (108), the peripheral low RI region (104b) being defined by a peripheral trench relative RI in the range of -0.15% to -0.45%. Further, the multicore optical fiber (200) is configured to exhibit a crosstalk of less than or equal to -40 dB/km at a wavelength of 1550 nm.

In accordance with an embodiment of the present disclosure, the optical fiber (100, 200) comprises at least one core region (102) having a core relative RI (Δc) in the range of 0.15% to 0.45%, where the core region (102) is configured to guide optical signals via total internal reflection. The cladding region (108) surrounding the at least one core region (102) such that the cladding region (108) comprises a low RI region (104) adjacent to the at least one core region (102), the low RI region (104a) being defined by a trench relative RI (Δt) in the range of -0.36% to -0.7% and a peripheral low RI region (104b) located at the outer periphery of the cladding region (108), the peripheral low RI region (104b) being defined by a peripheral trench relative RI in the range of -0.15% to -0.45%. Further, the peripheral low RI region (104b) is configured to contribute to reduction of leakage losses up to 0.0005, particularly in reduced-diameter optical fibers with a glass diameter of less than 80±1 µm.

In accordance with an embodiment of the present disclosure, the optical fiber cable (300) comprises a plurality of optical fibers (100, 200), each optical fiber (100, 200) comprises at least one core region (102) having a core relative RI (Δc) in the range of 0.15% to 0.45%, where the core region (102) is configured to guide optical signals via total internal reflection. Further, the cladding region (108) surrounding the at least one core region (102), where the cladding region (108) comprising at least one low refractive index (RI) region defined by a trench relative RI (Δt) in the range of -0.36% to -0.7%. A sheath (306) surrounding the plurality of optical fibers (100, 200).

In accordance with an embodiment of the present disclosure, a method for manufacturing an optical fiber (100, 200). The method comprises steps of providing a porous core soot preform comprising a core region (102) and a cladding region (104).

Another step of doping the porous core soot preform with fluorine in an atmosphere having a fluorine-containing gas (such as SiF₄, SF₆, CF₄, and C₂F₆) and one or more carrier gases (H₂, O₂, N₂, He, Ar), where the fluorine-containing gas comprises at least 7 wt% fluorine by total weight.

Yet another step of consolidating the doped porous core soot preform by exposing to an inert atmosphere at a consolidation temperature in the range of 1400°C to 1600°C, thereby forming a glass core preform comprising a core region (102) and a fluorine-doped trench region (104) with a trench relative refractive index (Δt) in the range of -0.36% to -0.7%.

Yet another step of stretching the glass core preform to form one or more glass core rods.

Yet another step of surrounding the glass core rod with an outer cladding region to form an optical fiber perform and drawing the optical fiber preform in a furnace to obtain the optical fiber (100, 200).

In accordance with an embodiment of the present disclosure, a method for manufacturing a multicore optical fiber (200). The method comprises a step of obtaining a plurality of glass core rods from the glass core preforms, each glass core rods comprising a core region (102) and a fluorine-doped trench region (104) with a trench relative refractive index (Δt) in the range of -0.36% to -0.7%.

Another step of stacking the plurality of glass core rods in corresponding drilled holes in a multicore preform assembly. Yet another step of collapsing the multicore preform assembly to form a multicore optical fiber perform and drawing the multicore optical fiber preform to obtain the multicore optical fiber (200).

In accordance with an embodiment of the present disclosure, the optical fiber (100, 200) comprises at least one core region (102) having a core relative RI (Δc) in the range of 0.15% to 0.45%, where the core region (102) is configured to guide optical signals via total internal reflection. A cladding region (108) surrounding the at least one core region (102) such that the cladding region (108) comprising at least one low refractive index (RI) region (104), the at least one low RI region being defined by a trench RI profile exhibiting a gradual decrease in relative RI from a core radius (Rc) to a minimum trench relative RI (Δtmin), where the core radius (Rc) corresponds to the radial position where the relative RI transitions to zero when measured from the minimum trench relative RI (Δtmin) towards the center of the core region (102).

In accordance with an embodiment of the present disclosure, the minimum trench relative RI (Δtmin) being in the range of -0.5% to -0.7%and the trench RI profile is configured to contribute to reduction in bend-induced losses. A trench thickness (T)is in the range of 10 µm to 16 µm such that the trench thickness is defined as the radial distance between the core radius (Rc) and the minimum trench radius (Rtₘᵢₙ) corresponding to the minimum trench relative RI (Δtmin). Further, the optical fiber (100, 200) is configured to exhibit a macro bend loss of less than or equal to 0.15 dB/turn at a bend radius of 5 mm and a wavelength of 1550 nm.

In accordance with an embodiment of the present disclosure, the optical fiber (100, 200) comprises at least one core region (102) having a core relative RI (Δc) in the range of 0.15% to 0.45%, where the core region (102) is configured to guide optical signals via total internal reflection. A cladding region (108) surrounding the at least one core region (102) such that the cladding region (108) comprising at least one low RI region (104). The at least one low RI region (104) being defined by a trench RI profile exhibiting a gradual decrease in relative RI from a core radius (Rc) to a minimum trench relative RI (Δtmin), where the core radius (Rc) corresponds to the radial position where the relative RI transitions to zero when measured from the minimum trench relative RI (Δtmin) towards the center of the core region (102).

In accordance with an embodiment of the present disclosure, the minimum trench relative RI (Δtmin) being in the range of -0.36% to -0.7%, where the trench RI profile is configured to reduce bend-induced losses. A trench thickness (T)is in the range of 10 µm to 16 µm, wherein the trench thickness is defined as the radial distance between the core radius (Rc) and the minimum trench radius (Rtₘᵢₙ) corresponding to the minimum trench relative RI (Δtmin).

In accordance with an embodiment of the present disclosure, the optical fiber (100, 200) is configured to exhibit an attenuation of less than or equal to 0.18 dB/km at a wavelength of 1550 nm.

In an example, an optical fiber (100) manufactured according to the disclosure comprises a core region (102) with a radius (Rc) of 4.42 µm, a core relative refractive index (Δc) of 0.36%, and an alpha parameter (α1) of 5.2. The cladding region (108) includes a trench region (104) having a minimum relative refractive index (Δtmin) of -0.43% at a radius (Rtmin) of approximately 17.2 µm, defined by an alpha parameter (α2) of 2.4, resulting in a trench thickness (T) of about 12.78 µm. The fiber has an outer glass diameter of 125 µm with a pure silica outer cladding (108o) (Δoc = 0%). This fiber exhibits a mode field diameter (MFD) of 8.51 µm at 1310 nm, a cable cut-off wavelength of 1212.8 nm, an attenuation at 1383 nm of less than 0.35 dB/km, and an exceptionally low macro bend loss of 0.052 dB/turn at a 5 mm bend radius and 1550 nm wavelength, providing better bend-insensitive performance achieved by the deep, adjacent trench structure.

Another optical fiber (100) may have a core region (102) with a radius (Rc) of 4.35 µm, a Δc of 0.375%, and an α1 of 6.4. Its trench region (104) has a Δtmin of - 0.44% located at a radius (Rtmin) of about 18.4 µm, with an α2 of 3.1, giving a trench thickness (T) of approximately 14.05 µm. The fiber's outer glass diameter is 125 µm. The measured performance includes an MFD of 8.49 µm at 1310 nm, a cable cut-off wavelength of 1223.5 nm, and a macro bend loss of 0.094 dB/turn at 5 mm/1550 nm, thereby confirming the effective trade-off between waveguide parameters and bend insensitivity provided by the disclosed refractive index profile within the claimed ranges.

Another example illustrates a reduced-diameter optical fiber (100) with an outer glass diameter of 80 µm. Its core region (102) has an Rc of 4.45 µm, a Δc of 0.35%, and an α1 of 8.2. The adjacent trench region (104) possesses a Δtmin of -0.415% at an Rtmin of ~16.4 µm (α2 = 3.5), corresponding to a trench thickness (T) of ~11.95 µm. Performance metrics include an MFD of 8.52 µm at 1310 nm, a cable cut-off wavelength of 1231.1 nm, and a very low macro bend loss of 0.038 dB/turn at 5 mm/1550 nm. This example provides high bend insensitivity and low attenuation even in fibers with a significantly reduced glass cladding diameter.

In an embodiment, the cladding region (108B) comprises a first trench region (104A) immediately adjacent to the core region (102) having a first minimum relative refractive index (Δt1min) in the range of -0.36% to -0.7%, and a second trench region (104B) separated from the first trench region by a pure silica region (114) having a thickness of 2 µm to 6 µm, the second trench region having a second minimum relative refractive index (Δt2min) in the distinct, shallower range of -0.25% to -0.45%. This dual-trench configuration provides enhanced bend insensitivity across multiple bending radii while maintaining compatibility with standard coating and cabling processes.

In an embodiment, optical fibers with a glass diameter of less than 80 µm ± 1 µm, particularly suitable for high-density cabling, the cladding region (108C) comprises both an inner trench region (104a) immediately adjacent to the core region (102) with Δtmin of -0.36% to -0.7%, and a peripheral trench region (104b) located at the outermost periphery of the glass cladding, the peripheral trench region having a relative refractive index in the range of -0.15% to -0.45% and a thickness of 4 µm to 6 µm. This peripheral down-doping significantly reduces leakage loss to less than 0.01 dB/km at 1550 nm and increases the mechanical strength of the reduced-diameter fiber.

In another embodiment, a multicore optical fiber (200) comprises a plurality of core regions (102), each surrounded by an individual trench region (104, 104a) having Δtmin of -0.36% to -0.7%, arranged within a common cladding region (108). The fiber further comprises a peripheral low refractive index region (104b) at or near the outer periphery of the cladding region with a relative refractive index of -0.15% to -0.45%, configured such that the crosstalk between adjacent core regions is less than -40 dB/km at 1550 nm while maintaining a core-to-core pitch of less than 40 µm. This enables high spatial density without signal degradation.

In another embodiment, the trench refractive index profile is has a slope relationship wherein the absolute value of the slope between 0-4 µm trench thickness is at least 1.5 times greater than the absolute value of the slope between 4-11.8 µm trench thickness. This non-linear profile, with a steeper initial descent followed by a more gradual decrease to Δtmin, is a direct result of the controlled fluorination process and provides optimized suppression of both macro bend and micro bend losses simultaneously.

In another embodiment, an optical fiber exhibiting low attenuation comprises the deep adjacent trench structure with Δtmin of -0.36% to -0.7%, characterized by an attenuation of ≤ 0.18 dB/km at 1550 nm and ≤ 0.32 dB/km at 1383 nm, achieved through a combination of the specific fluorination process and a dehydration step using chlorine-containing gas prior to fluorine doping. This fiber maintains an MFD of 8.2-9.0 µm at 1310 nm while achieving attenuation values significantly below industry standards for bend-insensitive fibers.

In another embodiment, an optical fiber system comprises the fiber with deep adjacent trench (Δtmin: -0.36% to -0.7%) combined with a coating system where the primary coating layer (110) has a Young's modulus of ≤ 0.2 MPa and a thickness of 20-40 µm, and the secondary coating layer (112) has a Young's modulus in the range of 1200-1500 MPa, this specific coating-fiber combination resulting in a total micro-bend loss of ≤ 0.3 dB/km at 1550 nm when measured by the Wire Mesh Method, showing an improvement over either component alone.

In another example, an optical fiber comprises a deep adjacent trench (Δtmin: -0.36% to -0.7%) in combination with a core region (102) having an alpha profile with α1 in the range of 8 to 9 and a core radius (Rc) of less than 4.5 µm, resulting in a mode field diameter of 8.2-8.6 µm at 1310 nm and a zero dispersion wavelength between 1303-1305 nm. This configuration optimizes the fiber for both bend insensitivity and dispersion characteristics.

In another embodiment, a fiber optic ribbon comprises a plurality of optical fibers (100, 200) each having the deep adjacent trench structure (Δtmin: -0.36% to - 0.7%), arranged in an intermittently bonded configuration wherein bonding material contacts the fibers at intervals along their length, the combination enabling a packing density increase (in some cases 15% or more) compared to conventional G.657 fibers in the same cable footprint while maintaining bend loss performance meeting ITU-T G.657.B3.

In another embodiment, a glass core preform for manufacturing the optical fiber is defined by a ratio of cladding diameter to core diameter greater than 3.45, specifically in the range of 3.5 to 4.3, with the fluorine-doped trench region extending through at least 2/3 of the radial thickness of the porous soot preform prior to consolidation. This specific geometry ensures proper trench formation and enables consistent drawing of fibers with the claimed performance characteristics.

One or more embodiments combine the deep, immediately adjacent trench with its specific refractive index profile to deliver optical performance: the fiber achieves ultra-low macro bend loss of ≤ 0.15 dB/turn at a 5 mm bend radius and 1550 nm (and ≤ 0.45 dB/turn at 1625 nm), a low micro-bend loss of ≤ 0.5 dB/km at 1550 nm as measured by the IEC 62221 Wire Mesh Method, and low attenuation - notably ≤ 0.35 dB/km at the 1383 nm wavelength due to minimized OH absorption, alongside attenuation of ≤ 0.35 dB/km at 1310 nm, ≤ 0.2 dB/km at 1550 nm, and ≤ 0.23 dB/km at 1625 nm, while maintaining optimized waveguide parameters including a mode field diameter of 8.2-9.0 µm at 1310 nm and a cable cut-off wavelength ≤ 1260 nm, ensuring full compatibility with standard single-mode telecommunication systems and exceeding the requirements of standards such as ITU-T G.657.B3.

While various aspects of the present disclosure have been illustrated and described, it will be clear that the present disclosure is not limited to these aspects only. Numerous modifications, changes, variations, substitutions, and equivalents will be apparent to those skilled in the art, without departing from the spirit and scope of the present disclosure, as described in the claims. Further, unless stated otherwise, terms such as "first" and "second" are used to arbitrarily distinguish between the elements such terms describe. Thus, these terms are not necessarily intended to indicate temporal or other prioritization of such elements.

## Claims

1. An optical fiber (100, 200) comprising:
at least one core region (102) having a core relative refractive index (Δc) in a range from 0.15% to 0.45%; and
a cladding region (108) surrounding the at least one core region (102), the cladding region (108) comprising at least one low refractive index region (104);
wherein the at least one low refractive index region (104) is directly adjacent to the at least one core region (102) such that a radial thickness of any intermediate region having a relative refractive index Δ within ±0.05% of a relative refractive index of pure silica is less than 1 µm, and
wherein the at least one low refractive index region (104) has a trench refractive index profile with a minimum trench relative refractive index (Δtmin) in a range from -0.36% to -0.7%.

2. The optical fiber (100, 200) as claimed in claim 1, wherein the trench refractive index profile decreases monotonically from a core radius (Rc) to a minimum trench radius (Rtmin) corresponding to the minimum trench relative refractive index (Δtmin) over a trench thickness (T) in a range from 10 µm to 16 µm.

3. The optical fiber (100, 200) as claimed in claim 2, wherein a ratio of the trench thickness (T) to the minimum trench relative refractive index (Δtmin) is in a range from 14 to 47 µm/%.

4. The optical fiber (100, 200) as claimed in claim 1, wherein, in the trench refractive index profile, the relative refractive index varies from 0% to -0.2% over a first portion of the trench thickness from 0 µm to 4 µm measured radially outward from the core radius (Rc), and varies from -0.2% to the minimum trench relative refractive index (Δtmin) over a subsequent portion of the trench thickness.

5. The optical fiber (100, 200) as claimed in claim 4, wherein the trench refractive index profile has a first slope over the first portion of the trench thickness and a second slope over the subsequent portion of the trench thickness, and wherein the first slope is greater than the second slope.

6. The optical fiber (100, 200) as claimed in claim 1, wherein the minimum trench relative refractive index (Δtmin) is at a radius in a range from 14 µm to 19 µm when the optical fiber (100, 200) has a glass diameter in a range from 80 µm to 125 µm.

7. The optical fiber (100, 200) as claimed in claim 1, having at least one of the following properties:
a macro bend loss of less than or equal to 0.15 dB/turn at a bend radius of 5 mm and a wavelength of 1550 nm;
a micro bend loss of less than or equal to 0.5 dB/km at a wavelength of 1550 nm as measured by the Wire Mesh Method of IEC 62221; and
an attenuation of less than or equal to 0.35 dB/km at a wavelength of 1383 nm.

8. The optical fiber (100, 200) as claimed in claim 1, wherein the cladding region (108) comprises:
a first low refractive index region (104A) as the at least one low refractive index region (104) adjacent to the at least one core region (102), having a first minimum trench relative refractive index (Δt1min) in the range from -0.36% to -0.7%; and
a second low refractive index region (104B) separated from the first low refractive index region (104A) by a pure silica region (114), the second low refractive index region (104B) having a second minimum trench relative refractive index (Δt2min) in a range from -0.25% to -0.45%.

9. A multicore optical fiber (200) comprising:
a plurality of core regions (102) each as claimed in any one of claims 1 to 7; and
the cladding region (108) surrounding the plurality of core regions (102), wherein the cladding region (108) further comprises a peripheral low refractive index region (104b) at or near an outer periphery of the cladding region (108), the peripheral low refractive index region (104b) having a peripheral trench relative refractive index in a range from -0.15% to -0.45%.

10. The multicore optical fiber (200) as claimed in claim 9, wherein a crosstalk between adjacent core regions (102) is less than -40 dB/km at a wavelength of 1550 nm.

11. An optical fiber cable (300) comprising:
a plurality of optical fibers (100, 200) as claimed in any one of claims 1 to 10; and
a sheath (306) surrounding the plurality of optical fibers (100, 200).

12. A method (400) for manufacturing a glass core preform for an optical fiber (100, 200), the method (400) comprising the steps of:
providing (S402) a porous core soot preform in an atmosphere containing a fluorine-containing gas and one or more carrier gases, the porous core soot preform having at least one core region (102) and a cladding region (108);
doping (S404) the porous core soot preform with fluorine at a temperature in a range from 1050°C to 1350°C; and
consolidating (S406) the doped porous core soot preform by exposing it to an inert atmosphere at a consolidation temperature in a range from 1400°C to 1600°C, thereby forming a glass core preform having a fluorine-doped trench region (104) along its longitudinal length, the trench region (104) having a minimum trench relative refractive index (Δtmin) in a range from -0.36% to -0.7% and being directly adjacent to the at least one core region (102).

13. The method (400) as claimed in claim 12, wherein the fluorine-containing gas constitutes at least 7% by weight of a total gas mixture during the doping step (S404).

14. The method (400) as claimed in claim 12, further comprising: dehydrating the porous core soot preform prior to the doping step (S404).

15. A method for manufacturing an optical fiber (100) as claimed in claim 12, comprising:
manufacturing a glass core preform according to the method (400);
stretching (S408) the glass core preform to form one or more glass core rods;
surrounding (S410) the one or more glass core rods with an outer cladding region (108o) to form an optical fiber preform; and
melting (S412) the optical fiber preform in a furnace to draw the optical fiber (100).
